## Europäisches Patentamt

## European Patent Office

## Office européen des brevets

(19)

(11) Veröffentlichungsnummer: **0 144 461**
**B1**

(12) # EUROPÄISCHE PATENTSCHRIFT

(45) Veroffentlichungstag der Patentschrift:
**20.05.87**

(51) Int. Cl.⁴: **G 01 J 3/46**

(21) Anmeldenummer: **83112577.8**

(22) Anmeldetag: **14.12.83**

(54) **Verfahren und Schaltungsanordnung zum Erkennen von Farbtönen und Farben.**

(43) Veroffentlichungstag der Anmeldung:
**19.06.85 Patentblatt 85/25**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**DE-A-2 118 720**
**DE-A-2 923 468**
**DE-A-2 923 468**
**US-A-3 560 758**

**ZEITSCHRIFT FÜR ANGEWANDTE CHEMIE, Band 87, Nr. 20, 1975; H.G. VÖLZ "Optische Eigenschaften von Pigmenten und objektive Methoden zu ihrer Prüfung und Bewertung", Seiten 721-750**

(73) Patentinhaber: **DR.- ING. RUDOLF HELL GmbH, Grenzstrasse 1-5, D-2300 Kiel 14 (DE)**

(72) Erfinder: **Jung, Eggert, Mühlenberg 25, D-2306 Schönberg (DE)**
Erfinder: **Hoffrichter, Ingo, Willy- Jacob- Weg 12, D-2300 Kiel 14 (DE)**

## Beschreibung

Die Erfindung bezieht sich insbesondere auf das Gebiet der elektronischen Reproduktionstechnik und betrifft ein Verfahren zum Erkennen von Farbtönen und Farben in farbigen Flächen gemäß dem Oberbegriff des Anspruchs 1 sowie eine Schaltungsanordnung.

Unter farbigen Flächen sollen beispielsweise Farbvorlagen für die elektronische Reproduktionstechnik, farbige Musterentwürfe zur Gewinnung von Steuerdaten für Textil-Verarbeitungsmaschinen oder farbige Druckträger verstanden werden.

Vor der eigentlichen Farberkennung werden mit Hilfe von Farberkennungs-Schaltungen innerhalb eines Farbraumes Farberkennungsräume um diejenigen Farborte abgegrenzt, deren Farben innerhalb der farbigen Fläche als Einzelfarben erkannt werden sollen. Während der Farberkennung wird die zu analysierende farbige Fläche punkt- und zeilenweise trichromatisch abgetastet und durch optoelektronische Wandlung der Abtastlichtanteile werden Farbsignale gewonnen, welche die Farbkoordinaten der Farborte der abgetasteten Farben in dem Farbraum darstellen. Durch Auswerten der Farbsignale in der Farberkennungs-Schaltung wird dann festgestellt, in welche abgegrenzten Farberkennungsräume die Farborte der abgetasteten Farben fallen, wodurch diese Farben identifiziert sind.

Solche Farberkennungs-Schaltungen finden in der Reproduktionstechnik z. B. bei der Herstellung von Farbauszügen mittels Farbscanner für den Mehrfarben-Mischdruck oder für den Einzelfarbendruck Anwendung.

Bei der Herstellung von Farbauszügen für den Mehrfarben-Mischdruck werden die durch Abtastung der Farbvorlage gewonnenen Farbsignale durch eine Grund-Farbkorrektur in Farbauszugs-Signale umgewandelt, welche ein Maß für die Stärke des Farbauftrages der Druckfarben Gelb, Magenta, Cyan und Schwarz beim Druckprozeß sind.

Durch die Grund-Farbkorrektur werden Farbfehler beseitigt, die sich unter anderem aufgrund der unterschiedlichen spektralen Eigenschaften von Vorlagenfarben und Druckfarben ergeben, und ggf. die redaktionelle gewünschte farbliche Aussage der Reproduktion gegenüber dem Original geändert. Neben der Grund-Farbkorrektur wird häufig eine zusätzliche Selektiv-Farbkorrektur durchgeführt, mit der gezielt ganz bestimmte Farben oder Farbtöne korrigiert werden sollen.

Bei der Selektiv-Farbkorrektur besteht dann das Problem, mit Hilfe von Farberkennungs-Schaltungen die speziell zu korrigierenden Farben oder Farbtöne zu erkennen und aus den Farberkennungs-Signalen Selektiv-Korrektursignale abzuleiten.

Wenn die zu reproduzierende Farbvorlage einen Farbverlauf, d. h. unterschiedliche Farbsättigung und/oder Helligkeit innerhalb einer Farbe oder eines Farbtons aufweist, werden Selektiv-Korrektursignale benötigt, deren Stärke ebenfalls von dem Farbverlauf abhängt, um verlaufene, sich allmählich ändernde Farbkorrekturen durchführen zu können.

Abweichend vom Mehrfarben-Mischdruck wird beim Einzelfarbendruck, der beispielsweise den Textil-, Dekor-, Verpackungs- oder Porzellandruck umfaßt, jede zu druckende Einzelfarbe vor dem Druckprozeß ermischt und dann die verschiedenen Einzelfarben in getrennten Vorgängen auf das Druckmedium übertragen. Beim Einzelfarbendruck besteht dann das Problem, mit Hilfe von Farberkennungs-Schaltungen für jede auszuziehende Einzelfarbe der Farbvorlage einen entsprechenden Farbauszug herzustellen. In diesem Fall muß aus dem Farberkennungs-Signal ein Farbauszugs-Signal abgeleitet werden.

Handelt es sich wieder um Farbvorlagen mit Farbverläufen, muß auch das Farbauszugs-Signal verlaufend sein, da es sowohl eine Aussage über die örtliche Verteilung der ausgezogenen Einzelfarbe als auch über die örtlich unterschiedliche Stärke des Farbauftrages liefern muß.

Aus der US-A- 3,210,552 und der DE-C- 25 44 703 sind bereits Farberkennungs-Schaltungen bekannt, bei denen die Farberkennungsräume innerhalb des Farbraumes durch elektrische Schwellen eingegrenzt werden. Die Zugehörigkeit einer abgetasteten Farbe zu einem der abgegrenzten Farberkennungsräume wird durch wertemäßigen Vergleich der bei der Abtastung der zu analysierenden Farbvorlage gewonnenen Farbsignale mit den Schwellen festgestellt.

Eine andere Art der Farberkennung ist in der DE-A- 29 23 468 angegeben worden. Die Farberkennungs-Schaltung besteht dort im wesentlichen aus einem Farberkennungs-Speicher, in dem jedem Farbort des Farbraumes ein Speicherplatz zugeordnet und jeder Speicherplatz durch das Farbkoordinaten-Tripel des betreffenden Farbortes adressierbar ist. Auf den Speicherplätzen sind Farbnummern abgelegt, welche die zu erkennenden Farben kennzeichnen, wobei jeweils alle mit derselben Farbnummer belegten Speicherplätze bzw. Farborte ein Farberkennungsraum bilden. Bei der punkt- und zeilenweisen Abtastung der farbigen Fläche adressieren die dabei gewonnenen Farbsignal-Tripel den Farberkennungs-Speicher, und die adressierten Farbnummern werden ausgegeben, wodurch die abgetasteten Farben identifiziert werden.

Die zuvor genannten Farberkennungs-Schaltungen geben Farberkennungs-Signale ab, welche lediglich eine Ja/Nein-Aussage darüber liefern, ob eine abgetastete Farbe in einen abgegrenzten Farberkennungsraum fällt oder nicht. Solche Farberkennungs-Signale sind nicht zur Erzeugung verlaufener Korrektursignale und Farbauszugs-Signale geeignet.

Aus der DE-C- 26 28 053 ist eine weitere Farberkennungs-Schaltung bekannt, deren Farberkennungs-Signal neben der Ja/Nein-Aussage eine zusätzliche Aussage über den räumlichen Abstand der abgetasteten Farbe von einer frei wählbaren Schwerpunktfarbe innerhalb eines um die Schwerpunktfarbe abgegrenzten Farberkennungsraumes liefert. Mit Hilfe dieser Farberkennungs-Schaltung können zwar Farbvariationen erkannt werden, die Farberkennungsräume lassen sich aber nicht optimal nach Form und Größe an die durch den Farbverlauf in der Farbvorlage gegebenen Farbbereiche anpassen, so daß das Farberkennungs-Signal keine eindeutige Aussage über die Farbsättigung und/oder Helligkeit liefert. Aus dem Farberkennungs-Signal lassen sich daher auch nicht die gewünschten verlaufenen Korrektursignale und Farbauszugs-Signale ableiten. Ein weiterer Nachteil der bekannten Farberkennungs-Schaltung besteht darin, daß sie nicht speziell zum Eingrenzen bzw. zum Erkennen von Farbtönen ausgebildet ist, so daß sich keine optimalen Selektiv-Korrektursignale und Farbauszugs-Signale für einzelne Farbtöne ableiten lassen.

Der im Anspruch 1 angegebenen Erfindung liegt daher die Aufgabe zugrunde, ein Verfahren und eine Schaltungsanordnung zum Erkennen von Farbtönen und Farben anzugeben, mit denen sich Erkennungsräume hinsichtlich Farbton und zusätzlich hinsichtlich Farbsättigung und Helligkeit optimal abgrenzen lassen und mit denen Erkennungssignale für Farbtöne und Farben erzeugt werden, die den Farbverlauf genau wiedergeben.

Die angegebene Erfindung ermöglicht außerdem die exakte Trennung ausgewählter Farbtöne von komplementären Farbtönen und von Farbtönen im Graubereich. Da das physiologische Farbempfinden des Menschen und die Abgrenzung der Erkennungsräume bei der angegebenen Erfindung in den Begriffen Farbton, Farbsättigung und Helligkeit ablaufen, besteht ein weiterer Vorteil darin, daß die Abgrenzung der Erkennungsräume für den Bediener überprüfbar ist.

Die Erfindung wird im folgenden anhand der Figuren 1 bis 14 näher erläutert. Es zeigen:

Figur 1 ein Ausführungsbeispiel einer Farberkennungs-Schaltung;

Figur 2 eine grafische Darstellung zur Koordinaten-Drehung;

Figur 3 eine grafische Darstellung von Signalverläufen;

Figur 4 eine grafische Darstellung von Signalverläufen;

Figur 5 eine grafische Darstellung von Signalverläufen;

Figur 6 eine grafische Darstellung von Signalverläufen;

Figur 7 eine grafische Darstellung von Signalverläufen;

Figur 8 ein Ausführungsbeispiel für ein optoelektronisches Abtastorgan;

Figur 9 ein Ausführungsbeispiel für eine Transformations-Stufe;

Figur 10a ein Ausführungsbeispiel für einen Signalgenerator;

Figur 10b eine grafische Darstellung;

Figur 11 ein Ausführungsbeispiel für einen Farbsättigungs-Signalgenerator;

Figur 12 ein Ausführungsbeispiel für eine Begrenzer-Stufe;

Figur 13 ein Anwendungsbeispiel bei der Farbkorrektur;

Figur 14 ein Anwendungsbeispiel bei der Herstellung von Farbauszügen.

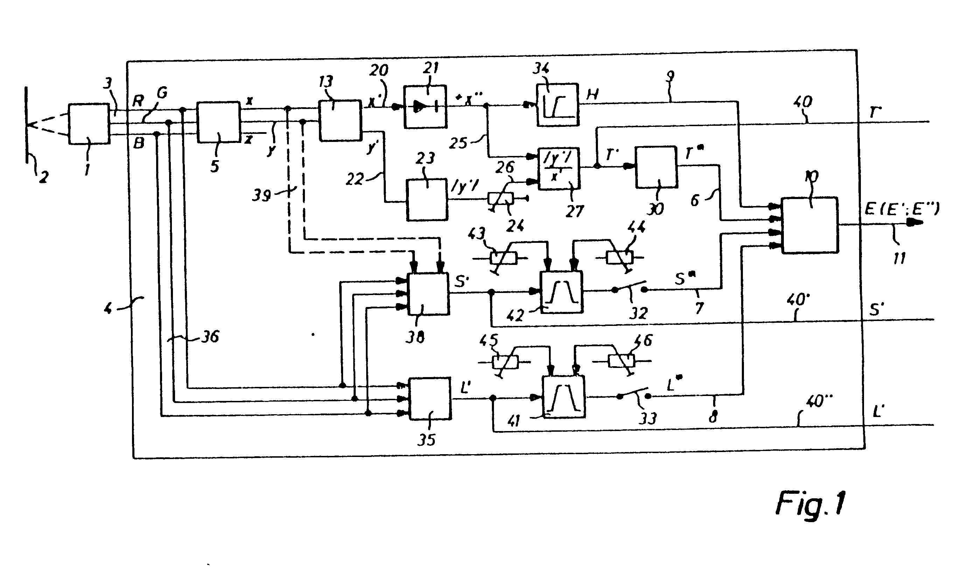

Fig. 1 zeigt ein Ausführungsbeispiel für eine Schaltungsanordnung zum Erkennen von Farbtönen und/oder Farben.

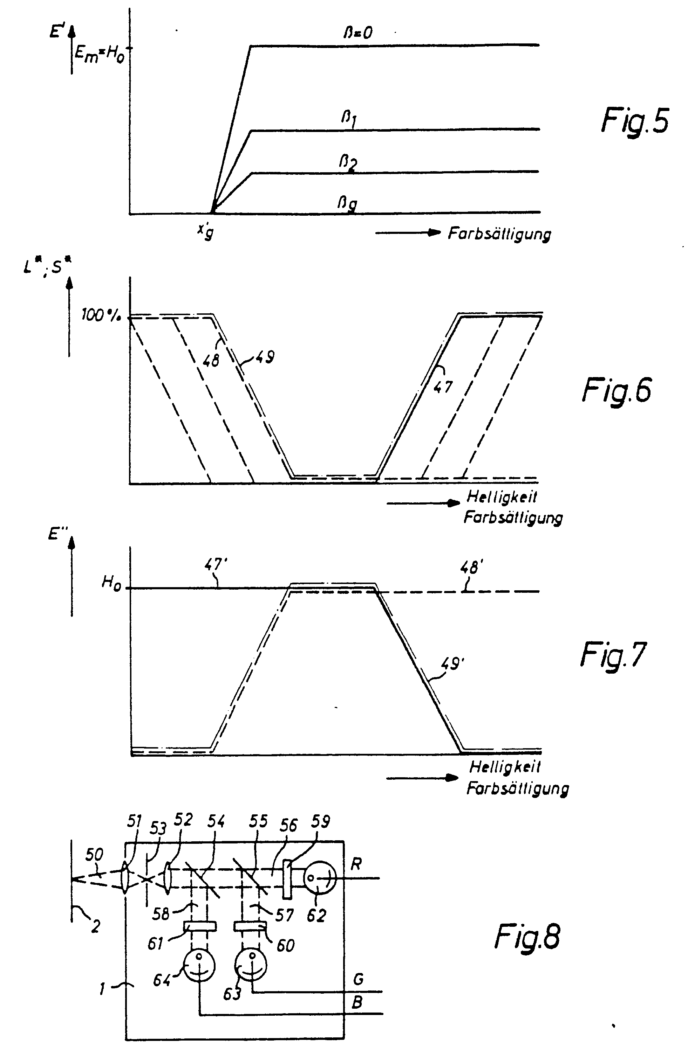

Ein optoelektronisches Abtastorgan 1 tastet eine beleuchtete farbige Fläche, beispielsweise eine Farbvorlage 2, ab, deren Farbtöne oder Farben erkannt werden sollen. Die Farbvorlage 2 kann eine Aufsichts- oder Durchsichtsvorlage sein. Das von der abgetasteten Farbvorlage 2 reflektierte oder durchgelassene Abtastlicht wird im Abtastorgan 1 mit Hilfe von Farbteilern, Korrekturfiltern und optoelektronischen Wandlern in die Farbmeßwert-Signale R, G und B umgewandelt, welche ein Maß für die Intensitäten der Grundfarbanteile "Rot", "Grün" und "Blau" an den abgetasteten Farben sind. Die Farbmeßwert-Signale R, G und B stellen die Raum- oder Farbkoordinaten der Farborte der abgetasteten Farben in dem kartesischen RGB-Farbraum dar. Das Abtastorgan 1, welches relativ zur Farbvorlage 2 verschiebbar ist, wird sowohl zum Ausmessen einzelner Farbpunkte in der Farbvorlage 2 als auch zum flächenmäßigen, punkt- und zeilenweisen Abtasten der Farbvorlage 2 während der eigentlichen Farb- oder Farbton-Erkennung verwendet. Ein Ausführungsbeispiel für ein Abtastorgan zeigt Fig. 8.

Die Farbmeßwert-Signale R, G und B werden über Leitungen 3 einer dem Abtastorgan 1 nachgeschalteten Erkennungs-Schaltung 4 zugeführt und dort zunächst in einer Umformer-Stufe 5 logarithmiert oder teillogarithmiert und gegebenenfalls nach einer Gradationskurve korrigiert. Die logarithmierten Farbmeßwert-Signale R', G' und B' werden durch eine Matrizierung gemäß Gleichungen (1) in Chrominanz-Signale x und y und in ein Luminanz-Signal z umgeformt.

$$x = a_{11}R' + a_{12}G' + a_{13}B'$$
$$y = a_{21}R' + a_{22}G' + a_{23}B' \quad (1)$$
$$z = a_{31}R' + a_{32}G' + a_{33}B'$$

Die Matrizierung entspricht einer Transformation der Farbkoordinaten des kartesischen RGB-Farbraumes in die Farbkoordinaten x, y und z des kartesischen Chrominanz/Luminanz-Farbraumes, wobei die Farbkoordinaten x und y die Lage der Farborte der Farben im XY-Farbkoordinatensystem der Chrominanzebene und die Farbkoordinate z die Helligkeitswerte der Farben kennzeichnen.

Die Erkennungs-Schaltung 4 erzeugt aus den zugeführten Signalen zunächst ein Farbton-Steuersignal T* auf einer Leitung 6, ein Farbsättigungs-Steuersignal S* auf einer Leitung 7, ein Luminanz-Steuersignal L* auf einer Leitung 8 und ein Hilfssteuersignal H auf einer Leitung 9.

Farbton (T), Farbsättigung (S) und Luminanz (L) sind die zylindrischen Farbkoordinaten des Farbton/Farbsättigung/Luminanz-Farbraumes, wobei die Lage der Farborte in dessen Chrominanzebene durch die Farbtonwerte T als Winkel und durch die Farbsättigungswerte S als Radien festgelegt sind, während die Helligkeitswerte der Farben durch die Luminanz L bestimmt werden. Dabei besteht zwischen den Farbkoordinaten x, y und z des Chrominanz/Luminanz- Farbraumes und den Farbkoordinaten Farbton T, Farbsättigung S und Luminanz L des Farbton/Farbsättigung/ Luminanz-Farbraumes folgender Zusammenhang:

$$T = c_1 \arctan \tfrac{y}{x}$$
$$S = c_2 \sqrt{x^2 + y^2} \quad (2)$$
$$L = c_3 z$$

In der Erkennungs-Schaltung 4 werden das Farbton-Steuersignal T*, das Farbsättigungs-Steuersignal S*, das Luminanz-Steuersignal L* sowie das Hilfssteuersignal H miteinander in einer Verknüpfungs-Stufe 10 zu einem Erkennungssignal E für Farbtöne oder Farben als Ausgangssignal der Erkennungs-Schaltung 4 auf einer Leitung 11 verknüpft.

Wenn eine Farbton-Erkennung durchgeführt werden soll, wird in der Erkennungs-Schaltung 4 ein sektorförmiger Farbton-Erkennungsbereich in der Chrominanzebene um einen in allen vier Quadranten frei wählbaren Farbton, nachfolgend als Schwerpunkt-Farbton $T_0$ bezeichnet, abgegrenzt. In diesem Falle ist das Erkennungs-Signal E auf der Leitung 11 ein Farbton-Erkennungssignal E', das in der Verknüpfungs-Stufe 10 aus dem Farbton-Steuersignal T* und dem Hilfssteuersignal H gewonnen wird. Bei der punkt- und zeilenweisen Abtastung der Farbvorlage 2 während der eigentlichen Farbton-Erkennung liefert das Farbton-Erkennungssignal E' eine Aussage über den Abstand der Farbtöne der abgetasteten Farben von dem eingestellten Schwerpunkt-Farbton $T_0$, falls die Farbtöne der abgetasteten Farben innerhalb des abgegrenzten Farbton-Erkennungsbereiches liegen, anderenfalls ist das Farbton-Erkennungssignal E' gleich Null.

Wenn eine Farb-Erkennung durchzuführen ist, wird der sektorförmige Farbton-Erkennungsbereich zusätzlich noch hinsichtlich der Helligkeit und der Farbsättigung abgegrenzt, so daß ein dreidimensionaler Farb-Erkennungsbereich um den Schwerpunkt-Farbton $T_0$ entsteht. In diesem Falle ist das Erkennungs-Signal E ein Farb-Erkennungssignal E'', welches durch eine zusätzliche Verknüpfung des Farbton-Steuersignals T* und des Hilfssteuersignals H bzw. des Farbton-Erkennungssignals E' mit dem Farbsättigungs-Steuersignal S* und/oder Luminanz-Steuersignal L* in der Verknüpfungs-Stufe 10 gebildet wird.

Aufbau und Wirkungsweise der Erkennungs-Schaltung 4 sollen nachfolgend näher erläutert werden, und zwar zunächst am Beispiel einer Farbton-Erkennung.

Zunächst wird der gewünschte Schwerpunkt-Farbton $T_0$, um den ein Farbton-Erkennungsbereich abgegrenzt werden soll, durch Vorgabe seiner Farbmeßwerte $R_0$, $G_0$ und $B_0$ im RGB-Farbkoordinatensystem bzw. seiner durch Matrizierung gebildeten Chrominanzwerte $x_0$ und $y_0$ im XY-Farbkoordinatensystem oder durch Ausmessen eines Probenpunktes in der Farbvorlage 2 mit Hilfe des Abtastorgans 1 definiert.

Die Chrominanzwerte $x_0$ und $y_0$ werden erfindungsgemäß durch eine auf den ausgewählten Schwerpunkt-Farbton $T_0$ einstellbare Matrizierung nach Gleichungen (3) in entsprechende Farbkoordinaten $x'_0$ und $y'_0$ transformiert, wobei die Transformations-Koeffizienten b, c, d und e so bestimmt werden, daß die Bedingungen $x'_0 > 0$ und $y'_0 = 0$ erfüllt sind.

$$x'_0 = bx_0 + cy_0$$
$$y'_0 = -dx_0 + ey_0 \quad (3)$$

Im gewählten Ausführungsbeispiel werden vorzugsweise Transformations-Koeffizienten der Form $b = e = \cos\alpha$ und $c = -d = \sin\alpha$ verwendet, so daß die Matrizierung einer Drehung eines X'Y'-Farbkoordinatensystems um einen Winkel $\alpha$ gegenüber dem ursprünglichen XY-Farbkoordinatensystem nach Gleichungen (4) entspricht.

$$x'_0 = x_0\cos\alpha + y_0\sin\alpha$$
$$y'_0 = -x_0\sin\alpha + y_0\cos\alpha \quad (4)$$

Der zur Erfüllung der Bedingungen $x'_0 > 0$ und $y'_0 = 0$ erforderliche Winkel $\alpha_0$ wird in einer Transformations-Stufe 13 durch einen automatischen Abgleichvorgang bei laufender Überprüfung der Bedingungen $x'_0 > 0$ und $y'_0 = 0$ in einer Überwachungs-Stufe innerhalb der Transformations-Stufe 13 bestimmt, indem der Winkel $\alpha$ verändert wird, bis die Überwachungs-Stufe die Erfüllung der Bedingungen festgestellt hat. Der gefundene Winkel $\alpha_0 = \arctan y_0/x_0$ entspricht dem Schwerpunkt-Farbton $T_0$, und die X'-Achse des um den Winkel $\alpha_0$ gedrehten X'Y'-Farbkoordinatensystems verläuft durch den transformierten Farbort $F'_0$ des Schwerpunkt-Farbtones $T_0$. Die beschriebene Koordinaten-Drehung entspricht einer Drehung des Chrominanz/Luminanz-Farbraumes um die Z-Achse.

Der gefundene Winkel $\alpha_0$ wird in der Transformations-Stufe 13 gespeichert und bei der eigentlichen Farbton-Erkennung zur laufenden Transformation der Chrominanz-Signale x und y in die gedrehten Chrominanz-Signale x' und y' gemäß Gleichungen (5) verwendet, wobei das gedrehte Chrominanz-Signal y' von Null verschieden ist für alle Farbtöne der abgetasteten Farben, die von dem ausgewählten Schwerpunkt-Farbton $T_0$ abweichen, und gleich Null ist für alle Farbtöne, die mit dem ausgewählten Schwerpunkt-Farbton $T_0$

übereinstimmen. Es liegt im·Rahmen der Erfindung, die Matrizierung nach Gleichungen (1) und (4) in einem einzelnen Schritt durchzuführen.

$$x' = x \cos \alpha_0 + y \sin \alpha_0$$
$$y' = -x \sin \alpha_0 + y \cos \alpha_0 \quad (5)$$

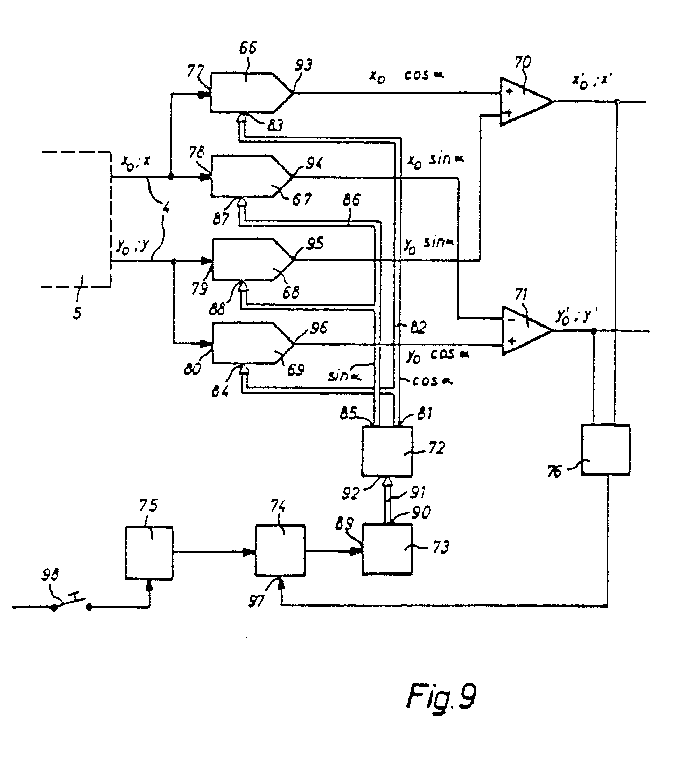

Ein detailliertes Ausführungsbeispiel für die Transformations-Stufe 13 wird in Fig. 9 angegeben.

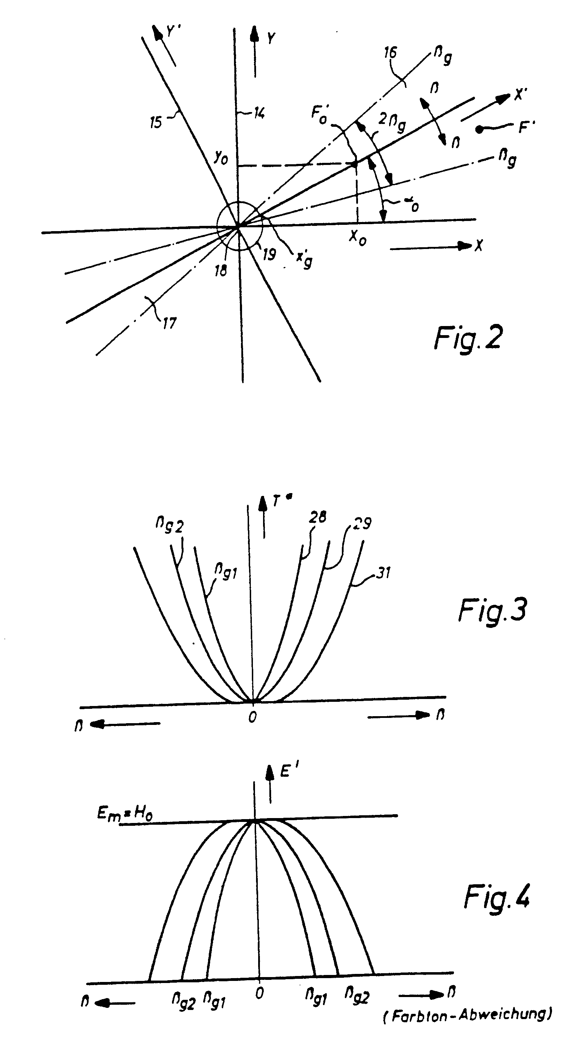

Die zuvor beschriebene Koordinaten-Drehung wird anhand einer grafischen Darstellung in Fig. 2 nochmals verdeutlicht.

Fig. 2 zeigt die Chrominanzebene des Chrominanz/Luminanz-Farbraumes mit dem XY-Farbkoordinatensystem 14, wobei die Z-Achse (Grauachse) des Chrominanz/Luminanz-Farbraumes senkrecht zur Chrominanzebene verläuft. Ein transformierter Farbort $F'_0$ eines ausgewählten Schwerpunkt-Farbpunkts $T_0$ ist im XY-Farbkoordinatensystem 14 durch die Farbkoordinaten $x_0$ und $y_0$ definiert. Gleichzeitig ist das um den Winkel $\alpha_0$ gedrehte X'Y'-Farbkoordinatensystem 15 dargestellt, dessen X'-Achse durch den Farbort $F_0$ verläuft, so daß der Farbort $F'_0$ im gedrehten X'Y'-Farbkoordinatensystem 15 die Farbkoordinaten $x'_0 > 0$ und $y'_0 = 0$ aufweist. Der Winkel $\alpha_0 = $ arc tan $y_0/x_0$ entspricht dem Schwerpunkt-Farbton $T_0$ im XY-Farbkoordinatensystem 14. Gleichzeitig ist symmetrisch zur X'-Achse des gedrehten X'Y'-Farbkoordinatensystems 15 ein sektorförmiger Farbton-Erkennungsbereich 16 dargestellt, dessen Grenzwinkel $\beta_g$ (Öffnungswinkel 2 $\beta_g$) bezogen auf die X'-Achse zur Eingrenzung der zu erkennenden Farbtöne einstellbar ist. Für einen beliebigen Farbort F' innerhalb des Farbton-Erkennungsbereiches 16 entspricht in erster Näherung bei kleinem Winkel das gedrehte Chrominanz-Signal x' der Farbsättigung und der Quotient $y'/x' = $ tan $\beta$ der Abweichung des abgetasteten Farbtons von dem gewählten Schwerpunkt-Farbton $T_0$, wobei der Quotient mit wachsender Abweichung ansteigt.

Außerdem zeigt Fig. 2 noch die zu den abgegrenzten Farbtönen gehörenden Komplementärfarbtöne innerhalb eines Sektors 17, der durch Spiegelung des Farbton-Erkennungsbereiches 16 an der Y'-Achse des X'Y'-Farbkoordinatensystems 15 entstanden ist. Das gedrehte Chrominanz-Signal x' ist für die abgegrenzten Farbtöne positiv, dagegen für die Komplementärfarbtöne negativ. Bei der Farbton bzw. Farberkennung erweist es sich oft als notwendig, um die Grauachse 18 einen zylindrischen oder tonnenförmigen Farberkennungsraum für "Grau" abzugrenzen, damit Farbschwankungen oder Verläufe im Grau als einheitliches Grau erkannt werden. Von einem solchen Farberkennungsraum für "Grau" ist in Fig. 2 noch die kreisförmige Schnittfläche 19 dargestellt, deren Radius durch einen Grenz-Farbsättigungswert $x'_g$ definiert ist.

Zunächst zurück zu Fig. 1.

Das in der Transformations-Stufe 13 erzeugte gedrehte Chrominanz-Signal x' wird über eine Leitung 20 einer Auswahl-Stufe 21 in Form einer Diodenschaltung zugeführt, welche nur die positiven Werte des gedrehten Chrominanz-Signals x' als Signal +x' durchläßt. Am Ausgang der Auswahl-Stufe 21 erscheint somit immer nur dann ein Signal, wenn der von der Farbvorlage 2 abgetastete Farbton, bezogen auf die Y'-Achse des gedrehten X'Y'-Farbkoordinatensystems 15 (Fig. 2), auf der Seite des abgegrenzten Farbton-Erkennungsbereiches 16 liegt, wenn es sich also um keinen Komplementärfarbton handelt, so daß in vorteilhafter Weise eine exakte Trennung von Farbtönen und Komplementärfarbtönen erreicht wird.

Das gedrehte Chrominanz-Signal y' gelangt von der Transformations-Stufe 13 über eine Leitung 22 auf eine Betrags-Stufe 23. In der Betrags-Stufe 23 wird der Betrag des gedrehten Chrominanz-Signals y' als Signal /y'/ gebildet. Durch amplitudenmäßige Einstellung des Signals /y'/ mittels eines Potentiometers 24 wird der Grenzwinkel $\beta_g$ für den gewünschten Farbton-Erkennungsbereich 16 (Fig. 2) festgelegt. Die Signale +x' und /y'/ werden über Leitungen 25 und 26 einer Dividier-Stufe 27 zugeführt, in der durch Quotientenbildung das Farbton-Signal T' gemäß Gleichung (6) gewonnen wird.

$$T' = \frac{/y'/}{+x'} = \tan \beta \quad (6)$$

Das Farbton-Signal T' liefert eine eindeutige Aussage über die betragsmäßige Abweichung eines auf der Farbvorlage 2 abgetasteten Farbtones von dem eingestellten Schwerpunkt-Farbton $T_0$ nach beiden Richtungen hin, wobei bei Farbton-Übereinstimmung $\beta = 0$ ist.

Durch die erfindungsgemäße Koordinaten-Drehung zur Gewinnung des Farbton-Signals T' werden die üblichen Schwierigkeiten bei der Bildung eines farbtonkennzeichnenden Signals, die sich aufgrund der Doppeldeutigkeit der Tangensfunktion und der Unsymmetrie innerhalb eines Quadranten ergeben, in vorteilhafter Weise vermieden und somit eine exaktere Farbtontrennung erreicht. Das Farbton-Signal T' wird in einer der Dividier-Stufe 27 nachgeschalteten Signalformer-Stufe 30 in das Farbton-Steuersignal T* auf der Leitung 6 umgewandelt.

Fig. 3 zeigt verschiedene Verläufe des Farbton-Steuersignals T* in Abhängigkeit des Winkels β. Die Verläufe 28 und 29 ergeben sich bei unterschiedlich eingestellten Grenzwinkeln $\beta_g$ für den Farbton-Erkennungsbereich 16, für den Fall, daß in der Signalformer-Stufe 30 keine Signalbeeinflussung stattfindet und das Farbton-Steuersignal T* dem Farbton-Signal T' entspricht. Mit Hilfe der Signalformer-Stufe 30 kann das Farbton-Signal T' amplituden- und formmäßig noch verändert werden, so daß beispielsweise das Farbton-Steuersignal T* im Bereich kleiner Winkel β nach Verlauf 31 verflacht wird.

Aus dem Farbton-Steuersignal T* auf der Leitung 6 und dem Hilfssteuersignal H auf der Leitung 9 wird in der Verknüpfungs-Stufe 10, die im Ausführungsbeispiel als Subtrahier-Stufe ausgebildet ist, das Farbton-Erkennungssignal E' auf der Leitung 11 gemäß Gleichung (7) gewonnen, wobei sich die beiden Schalter 32 und 33 in der dargestellten geöffneten Position befinden.

$$E' = H - T^* \quad (7)$$

Alternativ kann die Verknüpfung von Hilfssteuersignal H und Farbton-Steuersignal $T^*$ auch multiplikativ erfolgen.

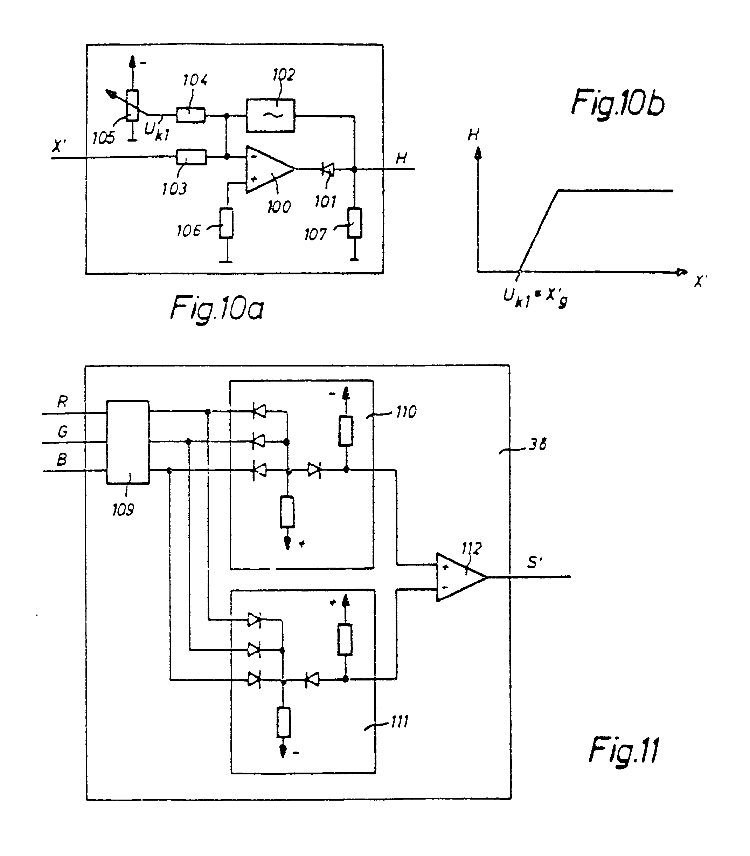

Das Hilfssteuersignal H, das in einem Signalgenerator 34 erzeugt wird, hat beispielsweise einen konstanten Wert $H_0$, der dann vorzugsweise $H_0 = \tan y_0/x_0$ gewählt wird. Vorteilhafter ist es aber, das Hilfssteuersignal H, wie im beschriebenen Ausführungsbeispiel, in erster Näherung von der Farbsättigung, d. h vom Signal $+x'$, abhängig zu machen. In diesem Fall hat das Hilfssteuersignal $H = f(x')$ vom maximalen Farbsättigungswert bis in die Nähe des bereits in Fig. 2 erläuterten Grenz-Farbsättigungswertes $x'_g$ den konstanten Wert $H_0$, fällt dann ab und hat zwischen dem Grenz-Farbsättigungswert $x'_g$ und der Grauachse ($x' = 0$) den Wert Null. Fig. 10 zeigt ein Ausführungsbeispiel für den Signalgenerator 34.

In Fig. 4 sind verschiedene Verläufe des Farbton-Erkennungssignals E' in Abhängigkeit des Winkels β für verschiedene Grenzwinkel $\beta_g$ der Farbton-Erkennungsbereiche 16 und für ein konstantes Hilfssteuersignal $H_0$ bzw. für den zwischen dem Grenz-Farbsättigungswert und dem maximalen Farbsättigungswert liegenden Bereich des Hilfssteuersignals $H = f(x')$ dargestellt.

Das Farbton-Erkennungssignal E' hat für Farbtöne, die dem ausgewählten Schwerpunkt-Farbton $T_0$ entsprechen ($\beta = 0$), einen maximalen Wert $E_m = H_0$, der bei $H_0 = \tan y_0/x_0$ genau dem Schwerpunkt-Farbton $T_0$ entspricht.

Mit steigender Abweichung der abgetasteten Farbtöne von dem Schwerpunkt-Farbton $T_0$ fällt das Farbton-Erkennungssignal E' ab und erreicht bei dem jeweiligen Grenzwinkel $\beta_g$ der eingestellten Farbton-Erkennungsbereiche den Wert $E' = 0$.

Alternativ zur Einstellung des Grenzwinkels $\beta_g$ des Farbton-Erkennungsbereiches mit Hilfe des Potentiometers 24 kann der Grenzwinkel $\beta_g$ auch durch Amplitudenänderung des Farbton-Signals T' in der Signalformer-Stufe 30 oder des Wertes $H_o$ des Hilfssteuersignals H im Signalgenerator 34 eingestellt werden.

Fig. 5 zeigt verschiedene Verläufe des Farbton-Erkennungssignals E' in Abhängigkeit des Signals x' bzw. der Farbsättigung für den Fall, daß das Hilfssteuersignal $H = f(x')$ und der Winkel β Parameter sind. Durch die Abhängigkeit des Farbton-Erkennungssignals E' von der Farbsättigung wird in vorteilhafter Weise eine Abgrenzung nach "Grau" erreicht.

Eine Abhängigkeit des Farbton-Erkennungssignals E' von der Farbsättigung kann alternativ auch dadurch erreicht werden, daß das Farbton-Steuersignal $T^*$ in der Verknüpfungs-Stufe 10 mit dem Signal $+x'$ multiplikativ verknüpft wird.

Wenn eine Farb-Erkennung durchgeführt wird, muß ein dreidimensionaler Farb-Erkennungsbereich im Farbton/ Farbsättigung/ Luminanz-Farbraum abgegrenzt werden, indem der sektorförmige Farbton-Erkennungsbereich zusätzlich hinsichtlich der Helligkeit und/oder der Farbsättigung eingegrenzt wird.

Zur Eingrenzung bezüglich der Helligkeit wird in der Erkennungs-Schaltung 4 in einem Luminanz-Signalgenerator 35, dem die Farbmeßwert-Signale R, G und B über die Leitungen 36 zugeführt werden, aus mindestens einem, vorzugsweise aus allen drei Farbmeßwert-Signalen R, G und B gemäß der Beziehung $L' = f_1R + f_2G + f_3B$ ein Luminanz-Signal L' gewonnen. Als Luminanz-Signal L' kann auch das in der Umformer-Stufe 5 gebildete Luminanz-Signal z verwendet werden, falls an der Bildung des Luminanz-Signals L' alle drei Farbmeßwert-Signale R, G und B beteiligt sind. In diesem Fall kann der Luminanz-Signalgenerator 35 entfallen.

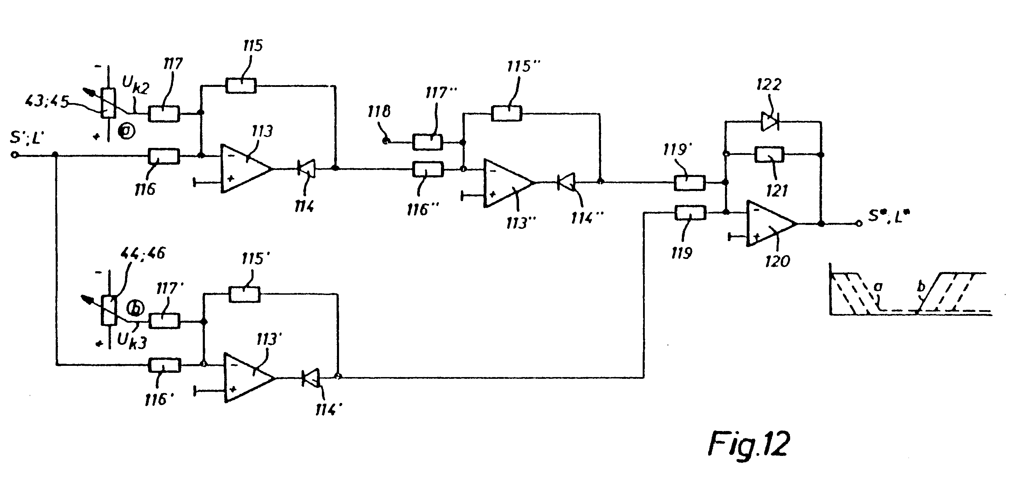

Zur Eingrenzung bezüglich der Farbsättigung erzeugt ein Farbsättigungs-Signalgenerator 38 ein Farbsättigungs-Signal S'. Ein Ausführungsbeispiel für den Farbsättigungs-Signalgenerator 38 zeigt Fig. 11. Das Farbsättigungs-Signal S' kann gemäß der Gleichung $S' = \sqrt{x^2 + y^2}$ aus den in der Umformer-Stufe 5 gebildeten Chrominanz-Signalen x und y gewonnen werden, welche dem Farbsättigungs-Signalgenerator 38 über die gestrichelt dargestellten Leitungen 39 zugeführt werden. In diesem Fall gibt das Farbsättigungs-Signal S' die exakten Farbsättigungswerte wieder. Der Farbsättigungs-Signalgenerator 38 enthält dann entsprechende Rechenbausteine (Quadrierer, Addierer, Radizierer), die aber keine hohe Arbeitsgeschwindigkeit zulassen. Um diese Schwierigkeit zu umgehen, wird in vorteilhafter Weise ein an die exakten Farbsättigungswerte angenähertes Farbsättigungs-Signal S' verwendet. In diesem Falle wird das angenäherte Farbsättigungs-Signal S' aus den über die Leitungen 36 an den Farbsättigungs-Signalgenerator 38 gelangenden Farbmeßwert-Signalen R, G und B abgeleitet, indem im Farbsättigungs-Signalgenerator 38 laufend das maximale und das minimale Farbmeßwert-Signal festgestellt und die Differenz der Extremwerte gebildet wird, welche näherungsweise dem Farbsättigungs-Signal S' entspricht, da das maximale Farbmeßwert-Signal einer, abgetasteten Farbe jeweils die Farbsättigung und das minimale Farbmeßwert-Signal den Grauton dieser Farbe repräsentiert. Da der Farbsättigungs-Signalgenerator 38 nunmehr nicht die oben genannten Rechenbausteine enthält, kann durch die angegebene Signalbildung in vorteilhafter Weise die Arbeitsgeschwindigkeit der Schaltungsanordnung und damit auch die Abtastgeschwindigkeit für die zu analysierende Farbvorlage 2 erhöht werden. Falls eine gröbere Näherung bei der Bildung des Farbsättigungs-Signals S' erlaubt ist, kann anstelle des Farbsättigungs-Signals S' auch das Signal x' verwendet werden.

Das Farbton-Signal T', das Farbsättigungs-Signal S' sowie das Luminanz-Signal L' sind über Leitungen 40, 40' und 40'' an den Ausgang der Erkennungs-Schaltung 4 für einen später beschriebenen Anwendungsfall der Erkennungs-Schaltung 4 geführt.

Dem Luminanz-Signalgenerator 35 ist eine Begrenzer-Stufe 41 nachgeschaltet, in der aus dem Luminanz-Signal L' das Luminanz-Steuersignal L* erzeugt wird. Ebenso ist dem Farbsättigungs-Signalgenerator 38 eine entsprechende Begrenzer-Stufe 42 nachgeschaltet, welche das Farbsättigungs-Signal S' in das Farbsättigungs-Steuersignal S* umwandelt. Die Bildung des Luminanz-Steuersignals L* und des Farbsättigungs-Steuersignal S* erfolgt durch Begrenzung des Luminanz-Signals L' und des Farbsättigungs-Signals S' mit Hilfe von Kompensationsspannungen, welche an Potentiometern 43 und 44 bzw. 45 und 46 einstellbar sind. Gleichzeitig können das Luminanz-Signal L' und das Farbsättigungs-Signal S' in den Begrenzer-Stufen 41 und 42 noch amplitudenmäßig und/oder nach Gradationskurven nichtlinear verändert werden. Ein Ausführungsbeispiel für die identisch aufgebauten Begrenzer-Stufen 41 und 42 zeigt Fig. 12.

Das Luminanz-Steuersignal L* auf der Leitung 8 und/oder das Farbsüttigungs-Steuersignal S* auf der Leitung 7 werden über die Schalter 32 und 33 auf die Verknüpfungs-Stufe 10 gegeben, in der gemäß Gleichung (8) das Farb-Erkennungssignal E'' auf der Leitung 11 erzeugt wird.

$$E'' = H - T^* - L^* - S^* \quad (8)$$
bzw.
$$E'' = E' - L^* - S^*$$

Alternativ kann die Verknüpfung von Farbton-Erkennungssignal E' mit dem Luminanz-Steuersignal L* und/oder dem Farbsättigungs-Steuersignal S* auch multiplikativ erfolgen.

Mit Hilfe der Potentiometer 43 bis 46 an den Begrenzer-Stufen 41 und 42 können bei der Abgrenzung der Farb-Erkennungsbereiche die Helligkeitswerte und Farbsättigungswerte festgelegt werden, bei denen die Helligkeit und die Farbsättigung der abgetasteten Farben Einfluß auf den Verlauf des Farb-Erkennungssignals E'' nehmen.

Mit Hilfe der Schalter 32 und 33 kann außerdem eine Auswahl der Signale getroffen werden, die an der Bildung des Farb-Erkennungssignals E'' beteiligt werden sollen.

Der Verlauf des Farb-Erkennungssignals E'' in bezug auf den Farbton der abgetasteten Farben entspricht dem in Fig. 4 dargestellten Verlauf des Farbton-Erkennungssignals E', wenn Helligkeit und Farbsättigung unberücksichtigt bleiben.

Fig. 6 zeigt verschiedene, durch die Potentiometer 43 bis 46 an den Begrenzer-Stufen 41 und 42 einstellbare Verläufe des Luminanz-Steuersignal L* in Abhängigkeit der Helligkeit bzw. des Farbsättigungs-Steuersignals S* in Abhängigkeit der Farbsättigung.

In Fig. 7 sind die zugehörigen Verläufe des Farb-Erkennungssignals E'' in Abhängigkeit der Helligkeit bzw. der Farbsättigung darstellt. Zur Vereinfachung der Darstellung ist angenommen, daß der abgetastete Farbton gerade dem ausgewählten Schwerpunkt-Farbton $T_0$ entspricht.

Sollen im wesentlichen dunkle Farben erkannt werden, wird mit Hilfe eines der Potentiometer an der Begrenzer-Stufe 41 z. B. der Verlauf 47 des Luminanz-Steuersignals L* eingestellt, wodurch sich der Verlauf 47' des Farb-Erkennungssignals E'' ergibt. In diesem Falle hat das Farb-Erkennungssignal E'' bei dunklen Farben einen hohen Signalpegel, und die Signalbegrenzung setzt erst bei helleren Farben ein.

Sollen dagegen im wesentlichen helle Farben erkannt werden, wird mit Hilfe des anderen Potentiometers an der Begrenzer-Stufe 41 beispielsweise der Verlauf 48 eingestellt, und es ergibt sich der Verlauf 48'' des Farb-Erkennungssignals E''. In diesem Falle hat das Farb-Erkennungssignal E'' bei hellen Farben einen hohen Signalpegel, der zu dunklen Farben hin begrenzt wird. Auf diese Weise können in vorteilhafter Weise helle und dunkle Farben exakt voneinander getrennt werden. Zur Abgrenzung eines Helligkeits-Bereiches kann mit Hilfe beider Potentiometer an der Begrenzer-Stufe 41 auch der Verlauf 49 des Luminanz-Steuersignals L* erzeugt werden. In diesem Falle hat das Farb-Erkennungssignal E'' den Verlauf 49', wodurch eine Begrenzung zu hellen und dunklen Farben um Farben mittlerer Helligkeit erreicht wird. So lassen sich im wesentlichen Farben erkennen, die in oder in der Nähe der Chrominanzebene liegen.

Durch eine sinngemäße Einstellung der Potentiometer an der Begrenzer-Stufe 42 kann eine Abgrenzung der abgetasteten Farben hinsichtlich kleiner oder großer Farbsättigungswerte sowie hinsichtlich eines Farbsättigungs-Bereiches vorgenommen werden.

Fig. 8 zeigt ein Ausführungsbeispiel für das optoelektronische Abtastorgan 1. Das von der Farbvorlage 2 reflektierte oder durchgelassene Abtastlicht 50 gelangt durch Objektive 51 und 52 und durch eine Blende 53 in das Abtastorgan 1 und wird dort mittels zweier dichroitischer Farbteiler 54 und 55 in drei Teilbündel 56, 57 und 58 aufgespalten. Die Teilbündel 56, 57 und 58 fallen durch Korrektur-Farbfilter 59, 60 und 61 auf drei optoelektronische Wandler 62, 63 und 64, die das empfangene Teillicht entsprechend den Intensitäten der Grundfarben-Anteile an den abgetasteten Farben in die primären Farbmeßwert-Signale R, G und B umwandeln.

Fig. 9 zeigt ein Ausführungsbeispiel für die Transformations-Stufe 13.

In der Transformations-Stufe 13 werden die Chrominanz-Signale $x_0$ und $y_0$ des ausgewählten Schwerpunkt-Farbtons $T_0$ während eines Abgleichvorganges durch monotone Änderung des Winkels $\alpha$ gedreht, bis die gedrehten Chrominanz-Signale $x'_0 > 0$ und $y'_0 = 0$ sind,

wobei der dabei gefundene Winkel $\alpha_0$ festgehalten wird. Diese Koordinaten-Drehung läuft gemäß Gleichung (4) ab.

Während der punkt- und zeilenweisen Abtastung der zu analysierenden Farbvorlage werden dann die laufend erzeugten Chrominanz-Signale x und y gemäß Gleichung (5) gedreht.

Die Transformations-Stufe 13 besteht aus vier Multiplizier-Stufen 66, 67, 68 und 69, einer Addier-Stufe 70, einer Subtrahier-Stufe 71, einem Festwert-Speicher 72, einem Adreßzähler 73, einer Tor-Stufe 74, einem Taktgenerator 75 sowie aus einer Überwachungs-Stufe 76.

Die Multiplizier-Stufe 66, 67, 68 und 69 sind in vorteilhafter Weise aus multiplizierenden D/A-Wandlern, z. B. aus integrierten Bausteinen vom Typ AD 7542 der Fa. Analog Devices, aufgebaut. In einen solchen multiplizierenden D/A-Wandler kann ein wählbarer Faktor in Form von Digitalwerten über einen Dateneingang eingegeben werden, die in einem internen Register speicherbar sind. Ein am Eingang des multiplizierenden D/A-Wandlers anstehendes analoges Signal wird mit dem eingestellten Faktor multipliziert, wobei das Produkt wiederum als analoges Signal am Ausgang des multiplizierenden D/A-Wandlers zur Verfügung steht.

Während des Abgleichvorganges wird das von der gestrichelt angedeuteten Umformer-Stufe 5 kommende Chrominanz-Signal $x_0$ auf die Eingänge 77 und 78 der Multiplizier-Stufen 66 und 67 gegeben, während das Chrominanz-Signal $y_0$ auf die Eingänge 79 und 80 der Multiplizier-Stufen 68 und 69 gelangt.

Im Festwert-Speicher 72 sind für Winkelwerte $\alpha$ von 0 bis 360° die entsprechenden Sinus- und Cosinus-Werte als Digitalwerte $b = e = \cos \alpha$ und $c = d = \sin \alpha$ durch die zugehörigen Winkelwerte $\alpha$ als Adressen des Festwert-Speichers 72 abrufbar gespeichert. Der Datenausgang 81 des Festwert-Speichers 72 für die Digitalwerte $b = e = \cos \alpha$ ist über einen Daten-Bus 82 mit den Dateneingängen 83 und 84 der Multiplizier-Stufen 66 und 69 und der entsprechende Datenausgang 85 für die Digitalwerte $c = d = \sin \alpha$ über einen Daten-Bus 86 mit den Dateneingängen 87 und 88 der Multiplizier-Stufen 67 und 68 verbunden.

Der einschaltbare Taktgenerator 75 steht über die Tor-Stufe 74 mit dem Takteingang 89 des Adreßzählers 73 in Verbindung. Der Ausgang 90 des Adreßzählers 73 ist über einen Adreß-Bus 91 an den Adreßeingang 92 des Festwert-Speichers 72 angeschlossen. Die Ausgänge 93 und 95 der Multiplizier-Stufen 66 und 68 stehen mit der Addier-Stufe 70 und die Ausgänge 94 und 96 der Multiplizier-Stufen 67 und 69 mit der Subtrahier-Stufe 71 in Verbindung. Der Ausgang der Addier-Stufe 70 und der Ausgang der Subtrahier-Stufe 71 sind an die Überwachungs-Stufe 76 für die Bedingungen $x'_0 > 0$ und $y'_0 = 0$ angeschlossen. Die Überwachungs-Stufe 76 steht mit einem Steuereingang 97 der Tor-Stufe 74 in Verbindung.

Der Abgleichvorgang wird durch Einschalten des Taktgenerators 75 mit Hilfe einer Taste 98 eingeleitet. Der Zähltakt des Taktgenerators 75 wird in den Adreßzähler 73, der vorher rückgesetzt wurde, eingezählt, wobei der ansteigende Zählerstand monoton ansteigenden Winkelwerten $\alpha$ entspricht. Der Adreßzähler 73 ruft nacheinander die Adressen des Festwert-Speichers 72 auf, die zu den Winkelwerten $\alpha$ gehörenden Digitalwerte $\cos \alpha$ und $\sin \alpha$ werden in die Multiplizier-Stufen 66, 67, 68 und 69 übertragen und dort mit den entsprechenden Chrominanz-Signalen $x_0$ und $y_0$ multipliziert. Die Einzelprodukte werden gemäß Gleichung (4) addiert bzw. voneinander subtrahiert, so daß an dem Ausgang der Addier-Stufe 70 das gedrehte Chrominanz-Signal $x'_0$ und am Ausgang des Subtrahier-Stufe 71 das gedrehte Chrominanz-Signal $y'_0$ erscheint. Dabei werden die gedrehten Chrominanz-Signale $x'_0$ und $y'_0$ laufend von der Überwachungs-Stufe 76 überprüft. Die Überwachungs-Stufe 76 gibt ein Steuersignal an die Tor-Stufe 74 ab, wenn die Bedingungen erfüllt sind, wodurch der Zähltakt unterbrochen wird. Der dabei erreichte und fixierte Zählerstand im Adreßzähler 73 entspricht dem gesuchten Winkel $\alpha_0$.

Fig. 10 a zeigt ein Ausführungsbeispiel für den Signalgenerator 34 zur Erzeugung des Hilfssteuersignals H in Abhängigkeit des Signals x'.

Der Signalgenerator 34 besteht aus einem invertierenden Verstärker 100, dessen Ausgang über eine Diode 101 und über ein Netzwerk 102 mit dem invertierenden Eingang des Verstärkers 100 verbunden ist. Der invertierende Eingang des Verstärkers 100 ist außerdem über einen ersten Summier-Widerstand 103 mit dem Signal x' beaufschlagt und über einen zweiten Summier-Widerstand 104 an ein Potentiometer 105 angeschlossen. An dem Potentiometer 105 kann eine Kompensationsspannung $U_{k1}$ eingestellt werden, die dem gewünschten Grenz-Farbsättigungswert $x'_g$ entspricht. Der nichtinvertierende Eingang des Verstärkers 100 ist über einen Widerstand 106 und die Anode der Diode 101 über einen Widerstand 107 an Massepotential gelegt. Bei Werten des Signals x', die betragsmäßig kleiner als die Kompensationsspannung $U_{k1}$ sind, ist das Hilfssteuersignal H = 0. Erreicht das Signal x' betragsmäßig die Kompensationsspannung $U_{k1}$, steigt das Hilfssteuersignal H entsprechend der im Netzwerk 102 eingestellten Verstärkung an und erreicht dann einen ebenfalls durch das Netzwerk 102 vorgegebenen Grenzwert $H_0$.

Fig. 10 b zeigt den Verlauf des Hilfssteuersignals H am Ausgang des Signalgenerators 34.

Fig. 11 zeigt ein Ausführungsbeispiel für den Farbsättigungs-Signalgenerator 38 zur Erzeugung des Farbsättigungs-Signals S' aus den Farbmeßwert-Signalen R, G und B.

Die vom nicht dargestellten Abtastorgan 1 gelieferten Farbmeßwert-Signale R, G und B werden in einer Logarithmier-Stufe 109 logarithmiert oder teillogarithmiert und gleichzeitig einer Maximumauswahl-Stufe 110 und einer Minimumauswahl-Stufe 111 zugeführt, welche aus den Farbmeßwert-Signalen R, G und B jeweils das maximale bzw. minimale Farbmeßwert-Signal feststellen. In einer der Maximumauswahl-Stufe 110 und der Minimumauswahl-Stufe 111 nachgeschalteten Subtrahier-Stufe 112 wird das Farbsättigungs-Signal S' als Differenzsignal aus den festgestellten maximalen und minimalen Farbmeßwert-Signalen gebildet, welches näherungsweise der Farbsättigung entspricht.

Fig. 12 zeigt ein Ausführungsbeispiel für die Begrenzer-Stufe 41 bzw. 42.

Die Begrenzer-Stufe besteht aus drei identisch aufgebauten, invertierenden Verstärkern 113, 113' und 113''. Die Ausgänge der Verstärker sind jeweils über Dioden 114, 114' und 114'' und über Widerstände 115, 115' und 115'' mit den invertierenden Eingängen der Verstärker 113, 113' und 113'' verbunden. Die invertierenden Eingänge der Verstärker 113 und 113' sind gemeinsan über Summier-Widerstände 116 und 116' mit dem Farbsättigungs-Signal S' bzw. dem Luminanz-Signal L' beaufschlagt. Der inventierende Eingang des Verstärkers 113 ist über einen Summier-Widerstand 117 mit den Potentiometern 43 bzw. 45 und der invertierende Eingang des Verstärkers 113' über einen weiteren Summier-Widerstand 117' mit den Potentiometern 44 bzw. 46 verbunden. Der invertierende Eingang des Verstärkers 113'' ist über einen Summier-Widerstand 116'' an den Ausgang des Verstärkers 113 und über einen weiteren Summier-Widerstand 117' an eine positive Spannungsquelle 118 angeschlossen. Die Ausgänge der Verstärker 113' und 113'' stehen über Summier-Widerstände 119 und 119' mit dem invertierenden Eingang eines Begrenzer-Verstärkers 120 in Verbindung, dessen Ausgang über eine Parallelschaltung eines Widerstandes 121 mit einer Begrenzer-Diode 122 auf den invertierenden Eingang gekoppelt ist. Am Ausgang des Begrenzer-Verstärkers 120 steht das Farbsättigungs-Steuersignal S* bzw. das Luminanz-Steuersignal L* mit den in den Fig. 6 dargestellten Verläufen zur Verfügung. Mit den Potentiometern 43 bzw. 45 und 44 bzw. 46 werden Kompensationsspannungen $U_{k2}$ und $U_{k3}$ eingestellt, welche die Einsatzpunkte der Spannungsbegrenzung bestimmen.

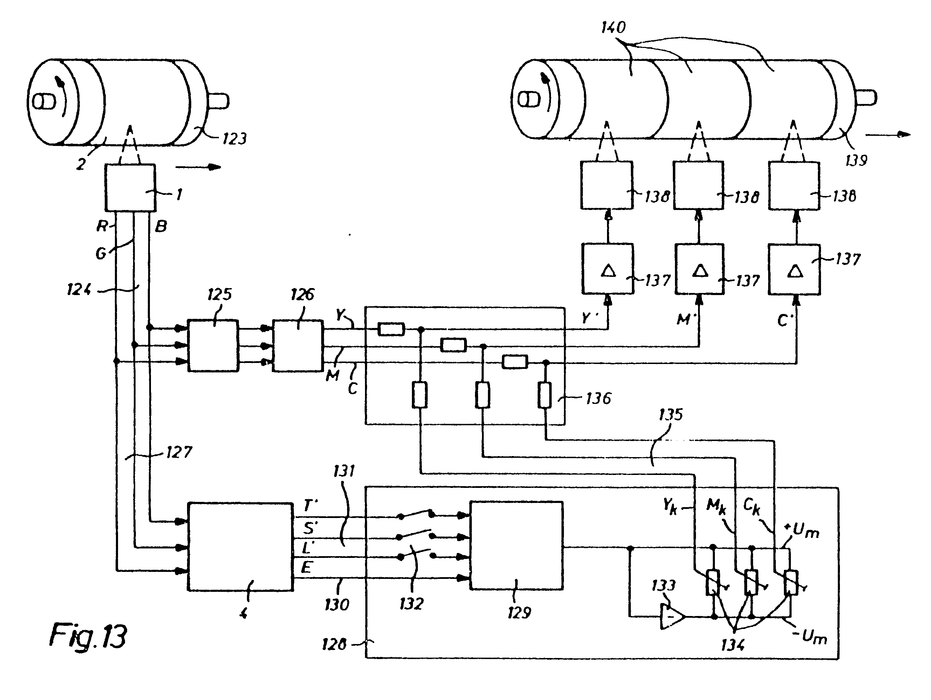

Fig. 13 zeigt ein Anwendungsbeispiel der Schaltungsanordnung zum Erkennen von Farbtönen oder Farben bei der Selektiv-Farbkorrektur in einem Farbscanner, mit dem Farbauszüge für den Mehrfarben-Mischdruck (Papierdruck) hergestellt werden.

Die Farbvorlage 2, von der Farbauszüge hergestellt werden sollen, ist auf eine rotierende Abtasttrommel 123 eines nicht näher dargestellten Farbscanners aufgespannt und wird von dem optoelektronischen Abtastorgan 1, welches sich axial an der Abtasttrommel 123 entlangbewegt, punkt- und zeilenweise, trichromatisch abgetastet. Die durch die Vorlagenabtastung gewonnenen Farbmeßwert-Signale R, G und B gelangen über Leitungen 124 und eine Logarithmier-Stufe 125 auf eine erste Farbkorrektur-Schaltung 126 zur Grund-Farbkorrektur, in der die Farbmeßwert-Signale R, G und B nach den Gesetzmäßigkeiten der subtraktiven Farbmischung in die Farbauszugs-Signale Y, M und C zur Aufzeichnung der Farbauszüge "Gelb", "Magenta" und "Cyan" und gegebenenfalls noch in das Farbauszugs-Signal K für die Aufzeichnung des Farbauszugs "Schwarz" umgesetzt werden.

Die Farbmeßwert-Signale R, G und B werden gleichzeitig über Leitungen 127 der nach Fig. 1 aufgebauten Erkennungs-Schaltung 4 zugeführt, an deren Ausgängen das Erkennungs-Signal E (Farbton-Erkennungssignal E' bzw. Farb-Erkennungssignal E'') sowie das Farbton-Signal T', das Farbsättigungs-Signal S' und das Luminanz-Signal L' zur Verfügung stehen. Die Ausgangssignale der Erkennungs-Schaltung 4 werden an eine zweite Farbkorrektur-Schaltung 128 zur Selektiv-Farbkorrektur weitergegeben.

Die zweite Farbkorrektur-Schaltung 128 weist eine Misch-Stufe 129 auf, die über eine Leitung 130 mit dem Erkennungssignal E sowie über Leitungen 131 und Schalter 132 mit dem Farbton-Signal T', dem Farbsättigungs-Signal S' und dem Luminanz-Signal L' beaufschlagt ist. In der Misch-Stufe 129, die z. B. als Multiplizierer ausgebildet ist, wird ein positives Signal $+U_m$ gebildet, von dem in einem Inverter 133 ein negatives Signal $-U_m$ abgeleitet wird. Zwischen dem positiven Signal $+U_m$ und dem negativen Signal $-U_m$ sind drei Potentiometer 134 geschaltet an denen drei selektive Farbkorrektur-Signale beider Polaritäten $\pm Y_K$, $\pm M_K$ und $\pm C_K$ für die Farbauszugs-Signale Y, M und C abgegriffen werden können, wobei die Potentiometerstellung sowohl die Korrekturstärke als auch die Korrekturrichtung bestimmt.

Die selektiven Farbkorrektur-Signale $Y_K$, $M_K$ und $C_K$ werden über Leitungen 135 an eine Überlagerungs-Stufe 136 im Signalweg der Farbauszugs-Signale Y, M und C gegeben, in der die selektiven Farbkorrektur-Signale $Y_K$, $M_K$ und $C_K$ den grundkorrigierten Farbauszugs-Signalen Y, M und C additiv überlagert werden. Die auf diese Weise korrigierten Farbauszugs-Signale Y', M' und C' werden über Endverstärker 137 an Aufzeichnungsorgane 138 in Form von Schreiblampen gegeben. Auf einer ebenfalls rotierenden Aufzeichnungstrommel 139 sind Aufzeichnungsmedien 140 z. B. Filme aufgespannt. Die Aufzeichnungsorgane 138, deren Helligkeiten durch die jeweils zugeordneten Farbauszugs-Signale Y', M' oder C' moduliert sind, bewegen sich gemeinsam axial an der Aufzeichnungstrommel 139 entlang und nehmen gleichzeitig die punkt- und zeilenweise Belichtung der Filme vor. Die belichteten und entwickelten Filme sind die gewünschten Farbauszüge für den Mehrfarben-Mischdruck.

In der Erkennungs-Schaltung 4 wird, wie ausführlich in Fig. 1 beschrieben, derjenige Farbton oder diejenige Farbe der Farbvorlage durch Abgrenzung eines entsprechenden Erkennungsbereiches festgelegt, die einer zusätzlichen, selektiven Farbkorrektur unterzogen werden sollen.

Im einfachsten Fall entspricht das in der Misch-Stufe 129 gebildete Signal $+U_m$ dem Erkennungssignale E. In vorteilhafter Weise wird das Signal $+U_m$ aber zusätzlich aus mindestens einem der in der Erkennungs-Schaltung 4 gewonnenen Signale oder Anteilen davon ermischt, die mittels der Schalter 132 auswählbar sind. Beispielsweise wird das Signal $+U_m$ durch Multiplikation des Erkennungssignals E mit dem Farbsättigungs-Signal S' gebildet und ist somit proportional der Farbsättigung.

Die selektiven Farbkorrektur-Signale $Y_K$, $M_K$ und $C_K$ erreichen ihre maximalen Werte, wenn der in der Farbvorlage 2 abgetastete Farbton dem für die Selektiv-Farbkorrektur ausgewählten Schwerpunkt-Farbton $T_0$ entspricht, nehmen mit wachsendem Abstand der abgetasteten Farbtöne zum Schwerpunkt-Farbton $T_0$ ab und erreichen den Wert Null, wenn die abgetasteten Farbtöne am Rande des abgegrenzten Erkennungsbereiches liegen. Man erhält also verlaufende selektive Farbkorrektur-Signale, die sich in vorteilhafter Weise dem jeweiligen Farbverlauf anpassen.

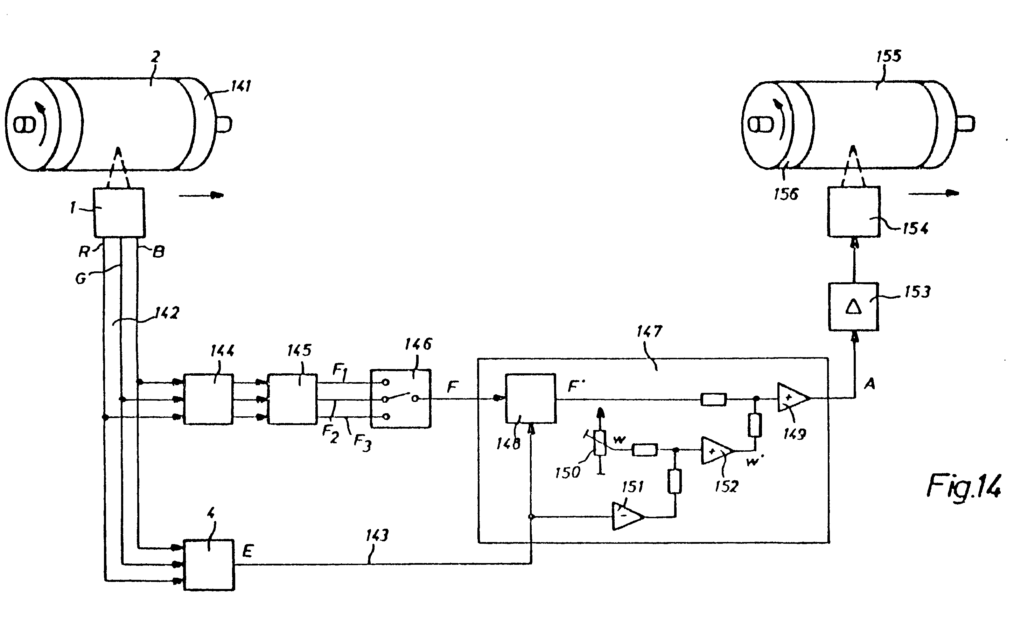

Fig. 14 zeigt ein weiteres Anwendungsbeispiel der Schaltungsanordnung zum Erkennen von Farbtönen oder Farben nach Fig. 1 bei einem Farbscanner zur Herstellung von Farbauszügen für den Einzelfarbendruck.

Wie bereits in der Beschreibungseinleitung dargelegt, wird beim Einzelfarbendruck abweichend vom Mehrfarben-Mischdruck jede zu druckende Einzelfarbe vor dem Druckprozeß ermischt und die verschiedenen Einzelfarben in getrennten Vorgängen auf das Druckmedium übertragen. Beim Einzelfarbendruck muß daher für jeden auszuziehenden Farbton bzw. für jede auszuziehende Einzelfarbe der Farbvorlage ein entsprechender Farbauszug hergestellt werden, wobei es darauf ankommt, daß der Farbverlauf der Farbvorlage im Farbauszug möglichst gut wiedergegeben wird.

Die Farbvorlage 2, von der die entsprechenden Farbauszüge für den Einzelfarbendruck hergestellt werden sollen, befindet sich auf einer rotierenden Abtasttrommel 141 eines nicht näher dargestellten Farbscanners und wird von dem optoelektronischen Abtastorgan 1 wiederum punkt- und zeilenweise, trichromatisch abgetastet. Die bei der Vorlagenabtastung gewonnenen Farbmeßwert-Signale R, G und B gelangen über Leitungen 142 an die Erkennungs-Schaltung 4 gemäß Fig. 1. Die Erkennungs-Schaltung 4 möge jeweils auf denjenigen Farbton oder diejenige Farbe der Farbvorlage 2, nachfolgend mit Auszugsfarbton bzw. Auszugsfarbe bezeichnet, voreingestellt sein, von dem oder von der momentan ein Farbauszug aufgezeichnet werden soll. Die Erkennungs- Schaltung 4 gibt dann ein entsprechendes Erkennungssignal E auf einer Leitung 143 ab.

Die im optoelektronischen Abtastorgan 1 gewonnenen Farbmeßwert-Signale R, G und B werden gleichzeitig über die Leitungen 142 auf eine Logarithmier-Stufe 144 gegeben, in der sie logarithmiert oder teillogarithmiert werden. Der Logarithmier-Stufe 144 ist eine Korrektur-Schaltung 145 zur Farb- und/oder Tonwertkorrektur nachgeschaltet. Diese Korrektur-Schaltung 145 kann z. B. ein Farbrechner für den Mehrfarben-Mischdruck sein. Die Korrektur-Schaltung 145 erzeugt Farbsignale $F_1$, $F_2$ und $F_3$, die je nach Einstellung der Korrekturregler in der Korrektur-Schaltung 145 den Farbauszugs-Signalen Y, M und C, Zwischenwerten oder aber auch den eingegebenen, unkorrigierten Farbmeßwert-Signalen R, G und B entsprechen können. Die Farbsignale $F_1$, $F_2$ und $F_3$ werden einem Auswahl-Schalter 146 zugeführt, mit dem dasjenige Farbsignal F für die Aufzeichnung des Farbauszuges ausgewählt wird, welches für den betreffenden Farbauszug am besten geeignet ist, welches beispielsweise den Farbverlauf des Auszugsfarbtons bzw. der Auszugsfarbe am besten wiedergibt.

Das Einzelfarbauszugs-Signal A entsteht durch Mischung des ausgewählten Farb-Signals F mit einem dem Bildweiß (hellstes Weiß) entsprechenden normierten Spannungswert W in einer Misch-Stufe 147, wobei das Mischungsverhältnis gemäß Gleichung (9) vom Erkennungssignal E abhängig ist.

$$A = F \cdot E + (W - E) \quad (9)$$

Der normierte Spannungswert W, z. B. W = 1, ist der normierte Weißpegel, auf den alle drei Farbmeßwert-Signale R, G und B beim Ausmessen der hellsten, neutralen Bildstelle (Weißpunkt) auf der Farbvorlage 2 bei der Weißpegel-Eichung des Farbscanners abgeglichen wurden.

Nach den in Fig. 4 dargestellten Verläufen hat das Erkennungssignal E bei Abtastung des Auszugsfarbtons in der Farbvorlage 2 einen maximalen Wert, z. B. $E_m = 1$, nimmt dann mit dem Abstand der abgetasteten Farbtöne von dem Auszugsfarbton ab und ist bei außerhalb des abgegrenzten Farbton-Erkennungsbereiches liegenden Farbtönen gleich Null (E = 0).

Folglich ist das Einzelfarben-Auszugssignal A gemäß Gleichung (9) bei Abtastung des Auszugsfarbtons gleich dem ausgewählten Farbsignal F, bei innerhalb des abgegrenzten Farbton-Erkennungsbereiches liegenden Farbtönen ein additives Mischsignal aus dem ausgewählten Farbsignal F und dem normierten Spannungswert W, wobei das Mischungsverhältnis vom Abstand des abgetasteten Farbtons zum Auszugsfarbton abhängig ist, und bei außerhalb des Farbton-Erkennungsbereiches liegenden Farbtönen gleich dem normierten Spannungswert W. Zur Erzeugung des Einzelfarbauszugs-Signals A wird das ausgewählte Farbsignal F einem Modulator 148 in der Misch-Stufe 147 zugeführt. Der Modulator 148, der außerdem mit dem Erkennungssignal E auf der Leitung 143 beaufschlagt ist, ist als Multiplizierer für Farbsignal F und Erkennungssignal E ausgebildet. Das Produkt $F \cdot E = F'$ wird auf eine Addier-Stufe 149 gegeben, in der dem Signal F' ein vom Erkennungssignal E abhängiger Spannungswert W' hinzuaddiert wird. Zur Bildung des Spannungswertes $W' = (W - E)$ wird der dem Bildweiß bzw. dem Weißpegel entsprechende normierte Spannungswert W an einem Potentiometer 150 eingestellt. Der normierte Spannungswert W und das in einem Inverter 151 invertierte Erkennungssignal E werden in einer weiteren Addier-Stufe 152 addiert, um den Spannungswert W' zu erhalten. Das Einzelfarbauszugs-Signal A gelangt vom Ausgang der Misch-Stufe 147 über einen Endverstärker 153 auf eine Schreiblampe als Aufzeichnungsorgan 154. Die Schreiblampe, deren Helligkeit von dem Einzelfarbauszugs-Signal A moduliert ist, belichtet punkt- und zeilenweise ein Aufzeichnungsmedium 155 (Film), das auf einer ebenfalls rotierenden Aufzeichnungstrommel 156 aufgespannt ist. Der belichtete und entwickelte Film ist der gewünschte Farbauszug.

Durch die beschriebene Art der Bildung des Einzelfarbauszugs-Signals wird in vorteilhafter Weise eine Entsättigung der außerhalb des eingestellten Erkennungsbereiches liegenden Farben bzw. Farbtöne erreicht. Gleichzeitig wird der Farbverlauf oder der Farbübergang an Farbbereichsgrenzen des Farbauszuges derart verbessert, daß die Bereichsgrenzen nicht mehr scharf, sondern überlappend aufgezeichnet werden. Durch die Überlappung entsteht eine Zone des Mischdrucks, in der beim Einzelfarbendruck die ermischten Farben nicht mehr nebeneinander, sondern übereinander gedruckt werden, wodurch störende Farbabrisse vermieden werden.

Durch die individuelle Einstellung des Verlaufs des Erkennungssignals E in Abhängigkeit von Farbsättigung und Helligkeit einerseits und durch die gesteuerte Farbentsättigung andererseits wird die Herstellung von Farbauszügen für den Einzelfarbdruck wesentlich verbessert. Beispielsweise lassen sich Farbauszüge für dunkle oder helle Farben herstellen, wobei die hellen bzw. dunklen Farben zu Weiß entsättigt oder korrigiert werden. Andererseits lassen sich Farbauszüge für Farben kleiner oder großer Farbsättigung herstellen, wobei die stark gesättigten bzw. die ungesättigten Farben zu Weiß korrigiert werden.

## Patentansprüche

1. Verfahren zum Erkennen von Farbtönen, bei dem eine farbige Fläche mit Licht bekannter Spektralzusammensetzung beleuchtet wird und die Intensitäten der drei Grundfarben im reflektierten oder durchgelassenen Licht als Farbmeßwerte optischelektrisch gemessen werden, welche die Farbkoordinaten der zugehörigen Farborte im RGB-Farbraum darstellen, bei dem die Farbmeßwerte durch eine Farbraumtransformation in Chrominanz- und Luminanz-Werte als Farbkoordinaten der betreffenden Farborte im Chrominanz/Luminanz-Farbraum umgewandelt werden und bei dem ein Erkennungsbereich innerhalb eines Farbraumes abgegrenzt wird und die ausgemessenen Farborte bzw. ihre Farbkoordinaten daraufhin überprüft werden, ob sie in den abgegrenzten Erkennungsbereich fallen oder nicht, dadurch gekennzeichnet, daß vor der eigentlichen Farbton-Erkennung

a) der Farbort ($F_0$) eines zu erkennenden Farbtons ($T_0$) durch Farbwerte ($R_0$, $G_0$, $B_0$) festgelegt wird;

b) der Farbort ($F_0$) des zu erkennenden Farbtons ($T_0$) durch eine erste Transformation seiner Farbwerte ($R_0$, $G_0$, $B_0$) in entsprechende Chrominanzwerte ($x'_0$, $y'_0$) derart in die Chrominanzebene des Chrominanz/Luminanz-Farbraumes transformiert wird, daß der transformierte Farbort ($F_0'$) auf einem der Achsenabschnitte eines X'Y'-Farbkoordinatensystems (15) in der Chrominanzebene liegt, und die dazu erforderlichen Transformationskoeffizienten festgehalten werden;

während der eigentlichen Farbton-Erkennung

c) die farbige Fläche zur Gewinnung von Farbmeßwerten (R, G, B) punkt- und zeilenweise abgetastet wird;

d) die Farborte (F) der Farbtöne der abgetasteten Farben laufend durch eine zweite Transformation der gewonnenen Farbmeßwerte (R, G, B) in Chrominanzwerte (x', y') mit den zuvor ermittelten Transformationskoeffizienten in die Chrominanzebene transformiert werden,

e) diejenigen Chrominanzwerte (x', y') ausgewählt werden, deren zugehörige transformierte Farborte (F') in derselben Hälfte des X'Y'-Farbkoordinatensystems (15) liegen wie der transformierte Farbort ($F'_0$) des zu erkennenden Farbtons ($T_0$),

f) ein Farbton-Signal (T') durch Bildung des Quotienten aus den Beträgen der ausgewählten Chrominanzwerte (x', y') gewonnen wird, welcher jeweils dem Tangens des Winkels ($\beta$) entspricht, der von dem betreffenden Achsenabschnitt und einer Verbindungslinie zwischen Koordinatenursprung und transformiertem Farbort (F') des Farbtons einer abgetasteten Farbe eingeschlossen wird, wodurch das Farbton-Signal (T') ein Maß für die jeweilige betragsmäßige Farbton-Abweichung des Farbtons einer abgetasteten Farbe von dem zu erkennenden Farbton ist; und

g) durch Verknüpfung eines im wesentlichen konstanten Hilfssteuersignals (H) mit dem Farbton-Signal (T') ein Farbton-Erkennungssignal (E') gewonnen wird, welches seinen größten Wert beim Abtasten des zu erkennenden

Farbtons ($T_0$) und den Wert Null beim Abtasten eines Farbtons mit einer vorgegebenen maximalen Farbton-Abweichung (tan $\beta_g$) hat, wodurch ein sektorförmiger Farbton-Erkennungsbereich (16) um den betreffenden Achsenabschnitt bzw. um den zu erkennenden Farbton abgegrenzt wird.

2. Verfahren nach Anspruch 1, <u>dadurch gekennzeichnet</u>, daß die Farbwerte des zu erkennenden Farbtons ($T_0$) durch optoelektronisches Ausmessen eines entsprechenden Farbtons in der farbigen Fläche festgelegt werden.

3. Verfahren nach Anspruch 1 oder 2, <u>dadurch gekennzeichnet</u>, daß die vorgegebene maximale Farbton-Abweichung von dem zu erkennenden Farbton ($T_0$) bzw. der Öffnungswinkel des Farbton-Erkennungsbereiches (16) durch Amplitudenänderung der Chrominanzwerte ($y'$) senkrecht zum betreffenden Achsenabschnitt, des Farbton-Signals ($T'$) oder des Hilfssteuersignals (H) eingestellt wird.

4. Verfahren nach einem der Ansprüche 1 bis 3, <u>dadurch gekennzeichnet</u>, daß das Farbton-Erkennungssignals ($E'$) durch Differenzbildung zwischen dem Hilfssteuersignal (H) und dem Farbton-Signal ($T'$) gewonnen wird.

5. Verfahren nach einem der Ansprüche 1 bis 4, <u>dadurch gekennzeichnet</u>, daß die erste Transformation der Farbmeßwerte ($R_0$, $G_0$, $B_0$) als Farbwerte des zu erkennenden Farbtons ($T_0$) in die Chrominanzwerte ($x_0$, $y_0$)

a) durch eine Matrizierung der Farbmeßwerte ($R_0$, $G_0$, $B_0$) in die Chrominanzwerte ($x_0$, $y_0$) eines XY-Farbkoordinatensystems (14) in der Chrominanzebene entsprechend einer Transformation des RGB-Farbraumes in den Chrominanz/Luminanz-Farbraum nach den Gleichungen:
$$x_0 = a_{11}R_0 + a_{12}G_0 + a_{13}B_0$$
$$y_0 = a_{21}R_0 + a_{22}G_0 + a_{23}B_0$$
b) und durch eine von der Lage des Farbortes ($F_0$) des zu erkennenden Farbton ($T_0$) innerhalb der Chrominanzebene abhängige Koordinatendrehung der Chrominanzwerte ($x_0$, $y_0$) des XY-Farbkoordinatensystems (14) in die Chrominanzwerte ($x'_0$, $y'_0$) des gegenüber dem XY-Farbkoordinatensystem (14) um den Winkel ($\alpha$) gedrehten X'Y'-Farbkoordinatensystems (15) entsprechend einer Drehung des Chrominanz/Luminanz-Farbraumes um die Luminanz-Achse (Z) nach den Gleichungen:
$$x'_0 = x_0 \cos \alpha + y_0 \sin \alpha$$
$$y'_0 = -x_0 \sin \alpha + y_0 \cos \alpha$$
erfolgt, wobei der Winkel ($\alpha = \alpha_0$) als Transformationskoeffizient so bestimmt wird, daß der transformierte Farbort ($F'_0$) des zu erkennenden Farbtons ($T_0$) auf einem der Achsenabschnitte des X'Y'-Farbkoordinatensystems (15) liegt.

6. Verfahren nach einem der Ansprüche 1 bis 5, <u>dadurch gekennzeichnet</u>, daß die zweite Transformation der Farbmeßwerte (R, G, B) der Farbtöne der abgetasteten Farben in die Chrominanzwerte ($x'$, $y'$) der transformierten Farborte ($F'$)

a) durch eine Matrizierung der Farbmeßwerte (R, G, B) in die Chrominanzwerte ($x$, $y$) des XY-Farbkoordinatensystems (14) in der Chrominanzebene entsprechend einer Transformation des RGB-Farbraumes in den Chrominanz/Luminanz-Farbraum nach den Gleichungen:
$$x = a_{11}R + a_{12}G + a_{13}B$$
$$y = a_{21}R + a_{22}G + a_{23}B$$
b) und durch eine Koordinatendrehung der Chrominanzwerte ($x$, $y$) des XY-Farbkoordinatensystems (14) in die Chrominanzwerte ($x'$, $y'$) des X'Y'-Farbkoordinatensystems (15) um den festgestellten Winkel ($\alpha_0$) nach den Gleichungen.
$$x' = x \cos \alpha_0 + y \sin \alpha_0$$
$$y' = -x \sin \alpha_0 + y \cos \alpha_0$$
erfolgt.

7. Verfahren nach Anspruch 5, <u>dadurch gekennzeichnet</u>, daß der Winkel ($\alpha$) durch einen automatischen Abgleichvorgang verändert wird, bis einer der Chrominanzwerte ($x'_0$ bzw. $y'_0$) im X'Y'-Farbkoordinatensystem (15) zu Null wird, wobei der dabei gefundene Winkel ($\alpha_0$) festgehalten wird.

8. Verfahren nach einem der Ansprüche 1 bis 7, <u>dadurch gekennzeichnet</u>, daß das Farbton-Signal ($T'$) vor der Verknüpfung mit dem Hilfssteuersignal (H) verformt wird.

9. Verfahren nach einem der Ansprüche 1 bis 8, <u>dadurch gekennzeichnet</u>, daß

a) aus den Farbmeßwerten (R, G, B) ein Farbsättigungs-Signal ($S'$) und aus mindestens einem der Farbmeßwerte (R, G, B) ein Luminanz-Signal ($L'$) erzeugt wird,

b) Farbsättigungs-Signal ($S'$) und Luminanz-Signal ($L'$) in Abhängigkeit vorgegebener Farbsättigungswerte und Helligkeitswerte amplitudenmäßig begrenzt werden, um ein Farbsättigungs-Steuersignal ($S^*$) und ein Luminanz-Steuersignal ($L^*$) zu erhalten; und

c) mindestens eines der Steuersignale ($S^*$ bzw. $L^*$) mit dem Farbton-Signal ($T'$) und dem Hilfssteuersignal (H) verknüpft wird, um das Farbton-Erkennungssignal ($E'$) zusätzlich in Abhängigkeit der Farbsättigung und/oder der Helligkeit zu steuern.

10. Verfahren nach einem der Ansprüche 1 bis 9, <u>dadurch gekennzeichnet</u>, daß zum Zwecke einer Farb-Erkennung

a) das Hilfssteuersignal (H) mit dem Farbton-Steuersignal ($T^*$), dem Farbsättigungs-Steuersignal ($S^*$) und dem Luminanz-Steuersignal ($L^*$) zu einem Farb-Erkennungssignal ($E''$) verknüpft wird, und

b) die Amplitudenbegrenzungen der Steuersignale ($S^*$ bzw. $L^*$) so eingestellt werden, daß das Farb-Erkennungssignal ($E''$) nur innerhalb eines räumlichen Farb-Erkennungsbereiches von Null verschieden ist.

11. Verfahren nach Anspruch 10, dadurch gekennzeichnet, daß die Summe aus Farbton-Steuersignal ($T^*$), Farbsättigungs-Steuersignal ($S^*$) und Luminanz-Steuersignal ($L^*$) gebildet wird und das Summensignal vom Hilfssteuersignal (H) subtrahiert wird.

12. Verfahren nach einem der Ansprüche 1 bis 11, dadurch gekennzeichnet, daß zur Erzeugung des Farbsättigungs-Signals (S')

a) aus den Farbmeßwerten (R, G, B) jeweils die maximalen und minimalen Farbmeßwerte ausgewählt werden, und

b) das Farbsättigungs-Signal (S') aus den Differenzen von maximalen und minimalen Farbmeßwerten gebildet wird.

13. Verfahren nach einem der Ansprüche 1 bis 12, dadurch gekennzeichnet, daß das Hilfssteuersignal (H) von den Farbsättigungswerten der abgetasteten Farben in der farbigen Fläche abhängig ist.

14. Verfahren nach Anspruch 13, dadurch gekennzeichnet, daß das Hilfssteuersignal (H) von dem Farbsättigungswert Null bis zu einem Grenz-Farbsättigungswert $(x_g)$, welcher die Ausdehnung eines Graubereiches um die Luminanz-Achse (Z) des Chrominanz/Luminanz-Farbraumes definiert, Null ist und von dem Grenz-Farbsättigungswert $(x_g)$ bis zum maximalen Farbsättigungswert einen konstanten Wert $(H_0)$ hat.

15. Verfahren nach einem der Ansprüche 1 bis 14, dadurch gekennzeichnet, daß das Farbton-Erkennungssignal (E') oder das Farb-Erkennungssignal (E'') zur Bildung von selektiven Farbkorrektur-Signalen bei der Herstellung von Farbauszügen für den Mehrfarbendruck verwendet wird.

16. Verfahren nach einem der Ansprüche 1 bis 14, dadurch gekennzeichnet, daß das Farbton-Erkennungssignal (E'') oder das Farb-Erkennungssignal (E'') zur Bildung von Farbauszugssignalen bei der Herstellung von Farbauszügen für den Einzelfarbendruck verwendet wird.

17. Schaltungsanordnung zum Erkennen von Farbtönen, mit der innerhalb des Farbraumes ein Erkennungsbereich für einen zu erkennenden Farbton abgegrenzt wird und mit der durch optoelektronische Abtastung einer farbigen Fläche festgestellt wird, ob die Farbtöne der abgetasteten Farben in den abgegrenzten Erkennungsbereich fallen oder nicht, bestehend aus

a) einer Lichtquelle bekannter Spektralzusammensetzung zur Beleuchtung der zu untersuchenden farbigen Flächen,

b) optoelektronischen Wandlern zur Erfassung der reflektierten oder durchgelassenen Intensitäten dreier Grundfarben als Farbmeßwerte und

c) einer Erkennungsschaltung, die mit den optoelektronischen Wandlern verbunden ist, zur Abgrenzung eines Erkennungsbereiches für einen zu erkennenden Farbton und zur Erzeugung eines Erkennungs-Signals, falls die Farbtöne der abgetasteten Farben in den Erkennungsbereich fallen, dadurch gekennzeichnet, daß die Erkennungs-Schaltung folgende Komponenten aufweist:

d) eine Transformations-Schaltung (5, 13), welche mit den optoelektronischen Wandlern (62, 63, 64) verbunden ist, und die Farbmeßwerte $(R_0, G_0, B_0$ bzw. R, G, B) in Chrominanzwerte $(x'_0, y'_0$ bzw. x', y') eines X'Y'-Farbkoordinatensystems in der Chrominanzebene des Chrominanz/Luminanz-Farbraumes umwandelt,

e) eine Auswahl- und Betrags-Schaltung (21, 22), welche an die Transformations-Schaltung (5, 13) angeschlossen ist, zur Auswahl und Betragsbildung von Chrominanzwerte $(+x', /y'/)$,

f) Einstellmittel (24) zur Abgrenzung eines Farbton-Erkennungsbereiches, welche an die Auswahl- und Betrags-Schaltung (21, 22) angeschlossen sind,

g) eine Dividier-Stufe (27), die mit den Einstellmitteln (24) in Verbindung steht, zur Bildung eines Farbton-Signals (T') aus den Beträgen der ausgewählten Chrominanzwerte $(+x', /y'/)$,

h) einen Signalgenerator (34) zur Erzeugung eines Hilfssteuersignals (H) und

i) eine Verknüpfungs-Stufe (10), die mit der Dividier-Stufe (27) und dem Signalgenerator (34) verbunden ist, zur Gewinnung eines Farbton-Erkennungsignals (E') aus dem Hilfssteuersignal (H) und dem Farbton-Signal (T').

18. Schaltungsanordnung nach Anspruch 17, dadurch gekennzeichnet, daß die Verknüpfungs-Stufe (10) als Differenz-Stufe ausgebildet ist.

19. Schaltungsanordnung nach Anspruch 17 oder 18, dadurch gekennzeichnet, daß zwischen der Dividier-Stufe (27) und der Verknüpfungs-Stufe (10) eine Signalformer-Stufe (30) für das Farbton-Signal (T') angeordnet ist.

20. Schaltungsanordnung nach einem der Ansprüche 17 bis 19, dadurch gekennzeichnet, daß die Erkennungs-Schaltung zur Farb-Erkennung zusätzlich folgende Komponenten aufweist:

a) einen Farbsättigungs-Signalgenerator (38) und einen Luminanz-Signalgenerator (35), welche an die optoelektronischen Wandler (62, 63, 64) angeschlossen sind, zur Gewinnung eines Farbsättigungs-Signals (S') und eines Luminanz-Signals (L') aus den Farbmeßwerten (R, G, B),

b) einstellbare Begrenzer-Stufen (41, 42), die den Signalgeneratoren (35, 38) nachgeschaltet sind, zur Erzeugung eines Farbsättigungs-Steuersignals (S*) und eines Luminanz-Steuersignals (L*) durch Amplitudenbegrenzung und

c) Schaltmittel (32, 33), die mit den Begrenzer-Stufen (41, 42) und der Verknüpfungs-Stufe (10) verbunden sind, zur wahlweisen Verknüpfung des Farbsättigungs-Steuersignals (S*) und/oder Luminanz-Steuersignals (L*) mit dem Farbton-Signal (T') und dem Hilfssteuersignal (H), um ein Farb-Erkennungssignal (E'') zu erzeugen.

## Claims

1. Method for recognition of hues, in which a coloured surface is illuminated with light of known spectral composition and the intensities of the three primary colours in the reflected or transmitted light are measured opto-electrically as colour measurement values which represent the colour co-ordinates of the corresponding colour locations in the RGB colour space, in which the colour measurement values are changed by a colour space transformation into chrominance and luminance values as colour co-ordinates of the corresponding colour locations in the chrominance/luminance colour space and wherein a recognition area is delimited within a colour space and the measured colour locations or rather their colour co-ordinates are checked as to whether they lie within the delimited recognition area or not, characterized in that prior to the actual colour hue recognition

a) the colour location ($F_0$) of a hue ($T_0$) which is to be recognized is defined by colour values ($R_0$, $G_0$, $B_0$);

b) the colour location ($F_0$) of the colour hue ($T_0$) which is to be recognized is so transposed by a first transformation of its colour values ($R_0$, $G_0$, $B_0$) into corresponding chrominance values ($x'_0$, $y'_0$) in the chrominance plane of the chrominance/luminance colour space that the transformed colour location ($F_0'$) lies on one of the axis sections of an X'Y' colour co-ordinate system (15) in the chrominance plane, and that the transformation factors required for this purpose are retained;

during the actual colour hue recognition

c) the coloured surface is scanned point by point and line by line to obtain colour measurement values (R, G, B);

d) the colour locations (F) of the hues of the colours scanned are currently changed by a second transformation of the colour measurement values (R, G, B) into chrominance values ($x'$, $y'$) in the chrominance plane by means of the transformation factors previously determined,

e) the chrominance values ($x'y'$) are selected whose corresponding transformed colour locations (F') lie in the same half of the X'Y' colour co-ordinate system as the transformed colour location ($F'_0$) of the hue ($T_0$) which is to be recognized.

f) a hue signal (T') is obtained by forming the quotient of the amounts of the chrominance values ($x'y'$) selected, which corresponds in each case to the tangent of the angle ($\beta$) which is subtended between the axis section in question and a connecting line between the co-ordinate origin and the transformed colour location (F') of the hue of a scanned colour, whereby the hue signal (T') is a measure of the quantitative hue deviation of the hue of a scanned colour from the hue which is to be recognized; and

g) a hue recognition signal (E') is obtained by combination of a substantially constant auxiliary control signal (H) with the hue signal (T'), which has its maximum value during the scanning of the hue ($T_0$) which is to be recognized and the value zero upon scanning a hue having a maximum preset hue deviation (tan $\beta_g$), whereby a sectorshaped hue recognition area (16) is delimited around the axis section in question, respectively around the hue which is to be recognized.

2. Method according to claim 1, characterized in that the colour values of the hue ($T_0$) which is to be recognized are established by opto-electronic mensuration of a corresponding hue in the coloured surface.

3. Method according to claim 1 or 2, characterized in that the maximum preset hue deviation from the hue ($T_0$) which is to be recognized, or rather the angle of aperture of the hue recognition area (16), is adjusted by amplitude variation of the chrominance values ($y'$) at right angles to the corresponding axis section, of the hue signal (T') or the auxiliary control signal (H).

4. Method according to one of the claims 1 to 3, characterized in that the hue recognition signal (E') is obtained by forming the difference between the auxiliary control signal (H) and the hue signal (T').

5. Method according to one of the claims 1 to 4, characterized in that the first transformation of the colour measurement values ($R_0$, $G_0$, $B_0$) as colour values of the hue ($T_0$) which is to be recognized into the chrominance values ($x_0$, $y_0$) is performed

a) by matrixing the colour values ($R_0$, $G_0$, $B_0$) into the chrominance values ($x_0$, $y_0$) of an XY colour co-ordinate system (14) in the chrominance plane corresponding a transformation of the RGB colour space into the chrominance/ luminance colour space, in accordance with the equations:

$$x_0 = a_{11}R_0 + a_{12}G_0 + a_{13}B_0$$
$$y_0 = a_{21}R_0 + a_{22}G_0 + a_{23}B_0$$

b) and by a co-ordinate rotation, depending on the position of the colour location ($F_0$) of the hue ($T_0$) which is to be recognized within the chrominance plane, of the chrominance values ($x_0$, $y_0$) of the XY colour co-ordinate system (14) into the chrominance values ($x'_0$, $y'_0$) of the X'Y' colour co-ordinate system (15) rotated by the angle ($\alpha$) with respect to the XY colour co-ordinate system (14) corresponding to a rotation of the chrominance/luminance colour space around the luminance axis (Z), in accordance with the equations:

$$x'_0 = x_0 \cos \alpha + y_0 \sin \alpha$$
$$y'_0 = -x_0 \sin \alpha + y_0 \cos \alpha$$

the angle ($\alpha = \alpha_0$) being so determined as the transformation factor that the converted colour location ($F'_0$) of the hue ($T_0$) which is to be recognized lies on one of the axis sections of the X'Y' colour co-ordinate system (15).

6. Method according to one of the claims 1 to 5, characterized in that the second transformation of the colour values (R, G, B) of the hues of the scanned colours into the chrominance values (x'y') of the transformed colour locations (F') is performed:

a) by matrixing the colour values (R, G, B) into the chrominance values (x, y) of the XY colour co-ordinate system corresponding to a transformation of the RGB colour space into the chrominance/luminance colour space according to the equations:

$$x = a_{11}R + a_{12}G + a_{13}B$$
$$y = a_{21}R + a_{22}G + a_{23}B$$

b) and by a co-ordinate rotation of the chrominance values (x, y) of the XY colour co-ordinate system (14) into the chrominance values (x', y') of the X'Y' colour co-ordinate system (15) around the ascertained angle ($\alpha_0$), according to the equations:

$$x' = x \cos \alpha_0 + y \sin \alpha_0$$
$$y' = -x \sin \alpha_0 + y \cos \alpha_0$$

7. Method according to claim 5, characterized in that the angle ($\alpha$) is varied by an automatic balancing action until one of the chrominance values ($x'_0$ or $y'_0$ respectively) becomes zero in the X'Y' colour co-ordinate system (15), whereby the angle ($\alpha_0$) established is retained.

8. Method according to one of the claims 1 to 7, characterized in that the hue signal (T') is distorted prior to combination with the auxiliary control signal (H).

9. Method according to one of the claims 1 to 8, characterized in that

a) a colour saturation signal (S') is produced from the colour values (R, G, B) and a luminance signal (L') is produced from at least one of the colour values (R, G, B),

b) the colour saturation signal (S') and the luminance signal (L') are limited in amplitude as a function of predetermined colour saturation values and of brightness values, to obtain a colour saturation control signal (S*) and a luminance control signal (L*); and

c) at least one of the control signals (S* and L* respectively) is combined with the hue signal (T') and the auxiliary control signal (H) to control the hue recognition signal (E') complementarily as a function of the colour saturation and/or of the brightness.

10. Method according to one of the claims 1 to 9, characterized in that for the purpose of colour recognition

a) the auxiliary control signal (H) is combined with the hue control signal (T*), the colour saturation control signal (S*) and the luminance control signal (L*) into a colour recognition signal (E''), and

b) the amplitude limitations of the control signals (S* and L* respectively) are so adjusted that the colour recognition signal (E'') differs from zero only within a spatial colour recognition zone.

11. Method according to claim 10, characterized in that the sum is established of the hue control signal (T*), the colour saturation control signal (S*) and the luminance control signal (L*) and that the summated signal is subtracted from the auxiliary control signal (H).

12. Method according to one of the claims 1 to 11, characterized in that for the purpose of generating the colour saturation signal (S')

a) the maximum and minimum colour values are selected in each case from the colour values (R, G, B), and

b) the colour saturation signal (S') is established from the differences between the maximum and minimum colour values.

13. Method according to one of the claims 1 to 12, characterized in that the auxiliary control signal (H) depends on the colour saturation values of the colours scanned in the coloured surface.

14. Method according to one of the claims 1 to 13, characterized in that the auxiliary control signal (H) is zero from a colour saturation value of zero up to a limiting colour saturation value ($x_g$) which defines the extension of a grey zone around the luminance axis (Z) of the chrominance/luminance colour space, and has a constant value ($H_0$) from the limiting colour saturation value ($x_g$) to the maximum colour saturation value.

15. Method according to one of the claims 1 to 14, characterized in that the hue recognition signal (E') or the colour recognition signal (E'') is utilized to form selective colour correction signals during the production of colour separations for multicolour printing.

16. Method according to one of the claims 1 to 14, characterized in that the hue recognition signal (E') or the colour recognition signal (E'') is utilized to form colour separation signals during the production of colour separations for single colour printing.

17. Circuitry for recognition of hues, whereby a recognition area for a hue which is to be recognized is delimited within the colour space and whereby it is established by optoelectronic scanning of a colour surface whether the hues of the colours scanned do or do not lie within the recognition area delimited, comprising:

a) a light source of known spectral composition for illumination of the coloured surfaces which are to be examined,

b) opto-electronic transducers for detection of the reflected or transmitted intensities of three primary colours as colour values, and

c) a recognition circuit which is connected to the optoelectronic transducers, for the delimitation of a recognition area for a hue which is to be recognized and for generating a recognition signal if the hue of the colours scanned lie within the recognition zone, characterized in that the recognition circuit has the following components:

d) a transformation circuit (5, 13) which is connected to the opto-electronic transducers (62 63, 64) and converts the colour values ($R_0$, $G_0$, $B_0$ or R, G, B) into chrominance values ($x'_0$, $y'_0$ or x', y') of an X'Y' colour co-ordinate system in the chrominance plane of the chrominance/luminance colour space,

e) a selector and evaluator circuit (21, 22) which is connected to the transformation circuit (5, 13) for selection and evaluation of chrominance values (+x', /y'/),

f) adjusting means (24) for delimitation of a hue recognition zone, which are connected to selector and evaluator circuit (21, 22),

g) a deviding stage (27) which is connected to the adjusting means (24) to form a hue signal (T') from the quantities of the chrominance values (+x', /y'/) selected,

h) a signal generator (34) for generating an auxiliary control signal (H), and

i) a combining stage (10) which is connected to the dividing stage (27) and to the signal generator (34) to obtain a hue recognition signal (E') from the auxiliary control signal (H) and from the hue signal (T').

18. Circuitry according to claim 17, characterized in that the combining stage (10) is constructed as a differential stage.

19. Circuitry according to claim 17 or 18, characterized in that a signal shaping stage (30) for the hue signal (T') is situated between the dividing stage (27) and the combining stage (10).

20. Circuitry according to one of the claims 17 to 19, characterized in that the recognition circuit complementarily has the following components for colour recognition:

a) a colour saturation signal generator (38) and a luminance signal generator (35) which are connected to the optoelectronic transducers (62, 63, 64) for obtaining a colour saturation signal (S') and a luminance signal (L') from the colour values (R, G, B);

b) adjustable limiter stages (41, 42) which are postconnected to the signal generators (35, 38), for generation of a colour saturation control signal (S*) and of a luminance control signal (L*) by amplitude limitation, and

c) switching devices (32, 33) which are connected to the limiter stages (41, 42) and the combining stage (10) for optional combination of the colour saturation control signal (S*) and/or luminance control signal (L*) with the hue signal (T') and the auxiliary control signal (H) to generate a colour recognition signal (E'').

**Revendications**

1.- Procédé pour identifier des nuances de couleurs, procédé dans lequel une surface colorée est éclairée avec une lumière de composition spectrale connue et les intensités des trois couleurs de base sont mesurées optiquement et électriquement en lumière réfléchie ou bien par transparence en tant que valeurs de mesure colorimétriques qui constituent les coordonnées de couleurs du lieu de couleur correspondant dans l'espace de couleur RGB, procédé dans lequel les valeurs de mesures colorimétriques sont converties par une transformation de l'espace de couleur en valeur de chrominance et de luminance en tant que coordonnées de couleurs des lieux de couleurs correspondants dans l'espace de couleurs chrominance/luminance, et dans lequel une zone d'identification est délimitée à l'intérieur d'un espace de couleur et les lieux de couleurs mesurées ou bien leurs coordonnées de couleurs, sont examinés pour reconnaître s'ils se situent ou non dans la zone d'identification ainsi délimitée, procédé caractérisé en ce que, avant l'identification proprement dite de la nuance de couleur:

a) le lieu de couleur $(F_0)$ d'une nuance de couleur $(T_0)$ à identifier est repéré par des valeurs de couleurs $(R_0, G_0, B_0)$,

b) le lieu de couleur $(F_0)$ de la nuance de couleur $(T_0)$ à identifier est transformé par une première transformation de ces valeurs de couleur $(R_0, G_0, B_0)$ en valeurs correspondantes de chrominance $(x'_0, y'_0)$ dans le plan de chrominance de l'espace de couleur chrominance/luminance, de façon que le lieu de couleur ainsi transformé $(F_0')$ se situe dans le plan de chrominance sur une des parties d'axes d'un système de coordonnées de couleurs X'Y' (15), et les coefficients de transformation nécessaires à cette transformation, sont fixés, tandis que pendant l'identification proprement dite de la nuance de couleur:

c) la surface colorée est balayée par points et par lignes pour obtenir des valeurs de mesure colorimétriques (R, G, B)

d) les lieux de couleurs (F) des nuances de couleurs des couleurs ainsi balayées sont transformés de façon continue dans le plan de chrominance par une seconde transformation des valeurs de mesure colorimétriques obtenues (R, G, B) en valeurs de chrominance (x', y') avec les coefficients de transformation précédemment déterminés.

e) on sélectionne les valeurs de chrominance (x', y') dont les lieux de couleurs transformés correspondants (F') se situent dans la même moitié du système de coordonnées de couleurs X' Y' (15) que le lieu de couleur transformé $(F'_0)$ de la nuance de couleur $(T_0)$ à identifier,

f) un signal de nuance de couleur (T') est obtenu par formation du quotient des montants des valeurs de chrominance ainsi sélectionnées (x', y'), ce signal correspondant respectivement à la tangente de l'angle (β) qui est délimitée par la partie d'axe concernée et une ligne de jonction entre l'origine des coordonnées et le lieu de couleur transformé (F') de la nuance de couleur d'une couleur balayée, grâce à quoi le signal de nuance de couleur (T') constitue une mesure pour l'écart en valeur entre la nuance de couleur d'une couleur balayée et la nuance de couleur à identifier,

g) par combinaison d'un signal de commande auxiliaire (H), en pratique constant, avec le signal de nuance de couleur (T'), on obtient un signal d'identification de nuances de couleur (E') qui a sa valeur maximale lors du balayage de la nuance de couleur à identifier $(T_0)$ et la valeur zéro lors du balayage d'une nuance de couleur avec un écart maximal prédéfini de nuance de couleur (tan $\beta_g$), grâce à quoi une zone d'identification (16) de nuances de couleur, en forme de secteurs, est délimitée autour de la partie d'axe concernée ou bien autour de la nuance de couleur à identifier.

2.- Procédé selon la revendication 1, caractérisé en ce que les valeurs de couleurs de la nuance de couleur à identifier ($T_0$) sont repérées par mesures optiques et électroniques d'une nuance de couleur correspondante sur la surface colorée.

3.- Procédé selon la revendication 1 ou 2, caractérisé en ce que l'écart maximal prédéfini de nuances de couleurs, à partir de la nuance de couleur à identifier ($T_0$) ou bien l'angle d'ouverture de la zone d'identification (16) de nuances de couleurs est réglé par modification d'amplitude des valeurs de chrominance ($y'$), perpendiculaires à la partie d'axe concernée, du signal de nuances de couleurs ($T'$) ou bien du signal de commande auxiliaire (H).

4.- Procédé selon une des revendications 1 à 3, caractérisé en ce que le signal d'identification de nuances de couleurs ($E'$) est obtenu par formation de la différence entre le signal de commande auxiliaire (H) et le signal de nuances de couleur ($T'$).

5.- Procédé selon une des revendications 1 à 4, caractérisé en ce que la première transformation des valeurs de mesures colorimétriques ($R_0$, $G_0$, $B_0$) en tant que valeurs de couleurs de la nuance de couleur à identifier ($T_0$) dans les valeurs de chrominance ($x_0$, $y_0$) s'effectue:

a) par une transformation matricielle des valeurs de mesures colorimétriques ($R_0$, $G_0$, $B_0$) en valeurs de chrominance ($x_0$, $y_0$) d'un système de coordonnées de couleurs X Y (14) dans le plan de chrominance, correspondant à une transformation de l'espace de couleur RGB en l'espace de couleur chrominance/luminance selon les égalités:

$$x_0 = a_{11}R_0 + a_{12}G_0 + a_{13}B_0$$
$$y_0 = a_{21}R_0 + a_{22}G_0 + a_{23}B_0$$

b) et par une rotation, dépendant de la position du lieu de couleur ($F_0$) de la nuance de couleur à identifier ($T_0$) à l'intérieur du plan de chrominance, des coordonnées des valeurs de chrominance ($x_0$, $y_0$) du système de coordonnées XY (14) en valeurs de chrominance ($x'_0$, $y'_0$) du système de coordonnées de couleurs X'Y' (15) décalé en rotation de l'angle ($\alpha$) par rapport au système de coordonnées de couleurs XY (14), correspondant à une rotation de l'espace de couleur chrominance/luminance sur l'axe de luminance (Z) selon les égalités:

$$x'_0 = x_0 \cos \alpha + y_0 \sin \alpha$$
$$y'_0 = -x_0 \sin \alpha + y_0 \cos \alpha$$

l'angle ($\alpha = \alpha_0$) étant déterminé en tant que coefficient de transformation de façon que le lieu de couleur transformé ($F'_0$) de la nuance de couleur à identifier ($T_0$) se situe sur une des parties d'axe du système de coordonnées de couleurs X'Y' (15).

6.- Procédé selon une des revendications 1 à 5, caractérisé en ce que la seconde transformation des valeurs de mesures colorimétriques (R, G, B) des nuances de couleurs des couleurs balayées en valeurs de chrominance ($x'$, $y'$) des lieux de couleurs transformés ($F'$) s'effectue:

a) par une transformation matricielle des valeurs de mesures matricielles des valeurs de mesures colorimétriques (R, G, B) en valeurs de chrominance (x, y) du système de coordonnées de couleurs X Y (14) dans le plan de chrominance, correspondant à une transformation de l'espace de couleur RGB en l'espace de couleur chrominance/luminance selon les égalités:

$$x = a_{11}R + a_{12}G + a_{13}B$$
$$y = a_{21}R + a_{22}G + a_{23}B$$

b) par une rotation de coordonnées de l'angle fixe ($\alpha_0$) des valeurs de chrominance (x, y) du système de coordonnées de couleurs X Y (14) en valeurs de chrominance ($x'$, $y'$) du système de coordonnées de couleurs X'Y' (15), selon les égalités:

$$x' = x \cos \alpha_0 + y \sin \alpha_0$$
$$y' = -x \sin \alpha_0 + y \cos \alpha_0$$

7.- Procédé selon la revendication 5, caractérisé en ce que l'angle ($\alpha$) est modifié par un processus automatique d'ajustement, jusqu'à ce qu'une des valeurs de chrominance ($x'_0$ ou bien $y'_0$) dans le système de coordonnées de couleurs X'Y' (15) devienne nulle, l'angle ($\alpha_0$) ainsi déterminé étant alors fixé.

8.- Procédé selon une des revendications 1 à 7, caractérisé en ce que le signal de nuance de couleurs ($T'$) est mis en forme avant sa combinaison avec le signal de commande auxiliaire (H).

9.- Procédé selon une des revendications 1 à 8, caractérisé en ce que:

a) à partir des valeurs de mesures colorimétriques (R, G, B), un signal de saturation de couleurs ($S'$) est obtenu, tandis qu'à partir d'au moins une des valeurs de mesures colorimétriques (R, G, B) un signal de luminance ($L'$) est obtenu,

b) le signal de saturation de couleurs ($S'$) et le signal de luminance ($L'$) sont limités en amplitude en fonction de valeurs prédéfinies de saturation de couleurs et de luminance, pour obtenir un signal de commande de saturation de couleurs ($S^*$) et un signal de commande de luminance ($L^*$),

c) au moins un des signaux de commande ($S^*$ ou bien $L^*$) est combiné avec le signal de nuance de couleur ($T'$) et le signal de commande auxiliaire (H), pour commander en supplement le signal d'identification de nuance de couleur ($E'$) en fonction de la saturation de couleurs et/ou de la luminance,

10.- Procédé selon une des revendications 1 à 9, caractérisé en ce que, en vue d'une identification de couleurs:

a) le signal de commande auxiliaire (H) est combiné avec le signal de commande de nuance de couleur ($T^*$), avec le signal de commande de saturation de couleurs ($S^*$) et avec le signal de commande de luminance (L*), pour obtenir un signal d'identification de couleurs (E''),

b) les délimitations d'amplitudes des signaux de commande (S* ou bien L*) sont réglées de façon que le signal d'identification de couleur (E'') n'est différent de zéro qu'à l'intérieur d'une zone spatiale d'identification de couleurs.

11.- Procédé selon la revendication 10, caractérisé en ce que l'on forme la somme du signal de commande de nuance de couleur (T*), du signal de commande de saturation de couleurs (S*) et du signal de commande de luminance (L*) et ce signal total est soustrait du signal de commande auxiliaire (H).

12.- Procédé selon une des revendications 1 à 11, caractérisé en ce que pour obtenir le signal de saturation de couleurs (S'):

a) on sélectionne à partir des valeurs de mesures colorimétriques (R, G, B) respectivement les valeurs de mesures colorimétriques maximales et minimales,

b) on forme le signal de saturation de couleurs (S') à partir de la différence des valeurs de mesures colorimétriques maximales et minimales,

13.- Procédé selon une des revendications 1 à 12, caractérisé en ce que le signal de commande auxiliaire (H) est dépendant des valeurs de saturation de couleurs des couleurs balayées sur la surface colorée.

14.- Procédé selon la revendication 13, caractérisé en ce que le signal de commande auxiliaire (H) est nul à partir de la valeur zéro de saturation de couleurs, jusqu'à une valeur limite ($x_g$) de saturation de couleurs, qui définit l'expansion d'une zone de gris autour de l'axe de luminance (Z) de l'espace de couleur chrominance/luminance, et que ce signal de commande auxiliaire (H) a une valeur constante ($H_0$) depuis la valeur limite ($x_g$) de saturation de couleurs, jusqu'à la valeur maximale de saturation de couleurs.

15.- Procédé selon une des revendications 1 à 14, caractérisé en ce que le signal d'identification de nuances de couleurs (E') ou bien le signal d'identification de couleurs (E'') est utilisé pour la formation de signaux sélectifs de corrections de couleurs lors de la réalisation des extraits de couleurs pour l'impression polychrome.

16.- Procédé selon une des revendications 1 à 4, caractérisé en ce que le signal d'identification de nuances de couleurs (E') ou bien le signal d'identification de couleurs (E'') est utilisé pour former les signaux d'extraits de couleurs lors de la réalisation d'extraits de couleurs pour l'impression monochrome.

17.- Dispositif de circuit pour l'identification de nuances de couleurs, grâce auquel une zone d'identification pour une nuance de couleur à identifier est délimitée à l'intérieur de l'espace de couleur et grâce auquel, par balayage optoélectronique d'une surface colorée, on détermine si les nuances de couleurs des couleurs ainsi balayées, se situent ou non dans la zone d'identification ainsi délimitée, dispositif de circuit constitué:

a) d'une source de lumière d'une composition spectrale connue pour éclairer les surfaces colorées à explorer

b) de convertisseurs opto-électroniques pour appréhender les intensités, par réflexion ou par transparence, des trois couleurs de base en tant que valeurs de mesures colorimétriques,

c) d'un circuit d'identification relié aux convertisseurs opto-électroniques, pour délimiter une zone d'identification pour une nuance de couleur à identifier et pour obtenir un signal d'identification dans le cas où les nuances de couleurs des couleurs ainsi balayées se situent dans la zone d'identification,

dispositif de circuit caractérisé en ce que le circuit d'identification comporte les composants suivants:

d) un circuit de transformation (5, 13) relié aux convertisseurs opto-électroniques (62, 63, 64) et qui convertit les valeurs de mesures colorimétriques ($R_0$, $G_0$, $B_0$ ou bien R, G, B) en valeurs de chrominance ($x'_0$, $y'_0$ ou bien x', y') d'un système de coordonnées de couleurs X'Y' dans le plan de chrominance de l'espace de couleurs chrominance/luminance,

e) un circuit de sélection et de formation de valeurs (21, 22) qui est raccordé aux circuits de transformation (5, 13) pour sélectionner et former la valeur des valeurs de chrominance ($+x'$, $/y'/$)

f) des moyens de réglage (24), raccordés aux circuits de sélection et de formation de valeurs (21, 22), pour délimiter une zone d'identification de nuances de couleurs,

g) un étage diviseur (27), en liaison avec les moyens de réglage (24), pour former un signal de nuance de couleurs (T') à partir des montants des valeurs de chrominance sélectionnées ($+x'$, $/y'/$)

h) un générateur de signaux (34) pour engendrer un signal de commande auxiliaire (H)

i) un étage de combinaisons (10) relié à l'étage diviseur (27) et au générateur de signaux (34), pour obtenir un signal d'identification de nuances de couleurs (E') à partir du signal de commande auxiliaire (H) et du signal de nuances de couleurs (T').

18.- Dispositif de circuit selon la revendication 17, caractérisé en ce que l'étage de combinaisons (10) revêt la forme d'un étage différentiel.

19.- Dispositif de circuit selon la revendication 17 ou 18, caractérisé en ce qu'entre l'étage diviseur (27) et l'étage de combinaisons (10) est disposé un étage de mise en forme de signaux (30) pour le signal de nuances de couleurs (T').

20.- Dispositif de circuit selon une des revendications 17 à 19, caractérisé en ce que le circuit d'identification pour l'identification de couleurs, comporte en outre les composants suivants:

a) un générateur (38) de signaux de saturation de couleurs et un générateur (35) de signaux de luminance, ces générateurs étant raccordes aux convertisseurs opto-électroniques (62, 63, 64) pour obtenir un signal de saturation de couleurs (S') et un signal de luminance (L') à partir des

**0 144 461**

valeurs de mesures colorimétriques (R, G, B),

   b) des étages de limitation réglables (41, 42) qui sont branchés à la suite des générateurs de signaux (35, 38) pour obtenir un signal de commande de saturation de couleurs (S*) et un signal de commande de luminance (L*) par délimitation d'amplitudes,

   c) des moyens de commutation (32, 33) reliés aux étages de délimitation (41, 42) et à l'étage de combinaisons (10), pour combiner à volonté le signal de commande de saturation de couleurs (S*) et/ou le signal de commande de liminance (L*) avec le signal de nuances de couleurs (T') et le signal de commande auxiliaire (H) afin d'obtenir un signal d'identification de couleurs (E'').

Fig. 1

Fig.2

Fig.3

( Farbton - Abweichung )

Fig.4

3

0 144 461

Fig.5

Fig.6

Fig.7

Fig.8

Fig. 9

7

0 144 461

Fig.10a

Fig.10b

Fig.11

Fig.12

0 144 461

Fig.13

0 144 461

13

Fig.14

0 144 461